# EUROPÄISCHE PATENTSCHRIFT

(11) **EP 0 748 821 B1**
(45) Veröffentlichungstag und Bekanntmachung des Hinweises auf die Patenterteilung: **04.11.1998**
(21) Anmeldenummer: 96109180.8
(22) Anmeldetag: 07.06.1996
(51) Int. Cl.: C08F 10/00, C08F 4/60, C07F 17/00

(54) **Übergangsmetallverbindung**
Transition metal compound
Composé de métal de transition

(30) Priorität: 12.06.1995 DE 19521335; 12.07.1995 DE 19525125
(43) Veröffentlichungstag der Anmeldung: 18.12.1996
(73) Patentinhaber: TARGOR GmbH, 55116 Mainz (DE)
(72) Erfinder: Fritze, Cornelia, Dr., 60529 Frankfurt (DE); Herrmann, Hans-Friedrich, Dr., 64521 Dornheim (DE); Erker, Gerhard, Prof. Dr., 48159 Münster (DE); Ruwwe, Johannes, DI., 48147 Münster (DE)

(56) Entgegenhaltungen:
- EP-A- 0 468 537
- EP-A- 0 540 108
- EP-A- 0 582 195
- EP-A- 0 587 143
- EP-A- 0 670 325
- WO-A-95/06071
- WO-A-96/00734
- WO-A-96/13529
- MACROMOLECULAR SYMPOSIA, Bd. 89, Januar 1995, Seiten 181-196zurich, XP000509165
- TRENDS IN POLYMER SCIENCE, Bd. 2, Nr. 5, Mai 1994, CAMBRIDGE, XP000443565 "metallocene catalysis polymers by design?"

## Beschreibung

Die vorliegende Erfindung betrifft eine Übergangsmetallverbindung, die vorteilhaft zur Polymerisation von Olefinen eingesetzt werden kann. Hierbei kann auf die Verwendung von Cokatalysatoren wie Aluminoxanen verzichtet werden.

Die Rolle von kationischen 14-Elektronen-Komplexen der allgemeinen Form R₃M⁺ (M = Ti, Zr, Hf) bei der Ziegler-Natta-Polymerisation mit Metallocenen ist allgemein anerkannt (M. Bochmann, Nachr. Chem. Lab. Techn. 1993, 41, 1220).

Während Methylaluminoxan (MAO) als bislang wirksamster Cokatalysator in hohem Überschuss eingesetzt werden muß, eröffnet die Synthese kationischer Alkylkomplexe der allgemeinen Form R₃M⁺ (M = Ti, Zr, Hf) einen Weg Zu MAO-freien Katalysatoren mit teilweise vergleichbarer Aktivität.

Kationische Alkylkomplexe können hergestellt werden durch
a) Oxidation von Metallocenalkyl-Komplexen mit beispielsweise AgBPh₄ oder [Cp₂Fe][BPh₄],
b) durch Protolyse von Metallocenalkylverbindungen mit beispielsweise schwach sauren Ammoniumsalzen des sehr stabilen, nicht basischen Tetra(pentafluorophenyl)boratanions (z.B. [PhMe₂NH]⁺[B(C₆F₅)₄]⁻) oder durch
c) Abstraktion einer Alkylgruppe aus Metallocenalkylverbindungen mit Hilfe von starken Lewis-Säuren. As Lewis-Säuren können dabei Salze verwendet werden (Ph₃C⁺BR₄⁻) oder auch starke neutrale Lewis-Säuren wie B(C₆F₅)₃.

In J. Organomet. Chem. 1970, 22, 659, wird eine Reaktion von (CH₃)₅CpTi(CH₃)₃ mit Triphenylboran bzw. Tribenzylboran beschrieben.

In J. Am. Chem. Soc. 1991, 113, 3623, wird die Synthese von "Kationen-ähnlichen" Metallocen-Polymerisationskatalysatoren beschrieben, die durch Alkylabstraktion von Metallocenalkylverbindungen mit Tris(pentafluorophenyl)boran dargestellt werden. Die Kristallstruktur von [1,2-(CH₃)₂C₅H₃]₂ZrCH₃]⁺[CH₃B(C₆F₅)₃]⁻ zeigt eine salzartige Struktur mit schwach koordinierender CH₃-Gruppe des Boratanions an das Metallzentrum. In EP 427,697 wird dieses Syntheseprinzip und ein entsprechendes Katalysatorsystem, bestehend aus einer neutralen Metallocenspezies (z.B. Cp₂Zr(CH₃)₂, einer Lewis-Säure (z.B. B(C₆F₅)₃) und Aluminiumalkylen beansprucht. In EP 520,732 wird ein Verfahren zur Herstellung von Salzen der allgemeinen Form LMX⁺ XA⁻ nach oben beschriebenem Prinzip beansprucht.

Neben diesen Produkten vom Typ eines Säure-Base-Adduktes sind auch zwitterionische Systeme denkbar.

EP 558,158 beansprucht zwitterionische Katalysatorsysteme, die aus Metallocenalkylverbindungen und Salzen der Form [R₃NH]⁺[BPh₄]⁻ dargestellt werden. Durch Umsetzung eines solchen Salzes mit ((CH₃)₅Cp)₂Zr(CH₃)₂ wird durch Protolyse unter Methanabspaltung intermediär ein Zirkonocenmethyl-Kation generiert, welches nach C-H - Aktivierung einer Tetraphenylborat Kohlenstoff-Wasserstoff-Bindung und abermaliger Methanabspaltung zum Zwitterion ((CH₃)₅Cp)₂Zr⁺-(m-C₆H₄)-B⁻Ph₃ abreagiert. Das Zr-Atom ist dabei kovalent an ein Kohlenstoffatom des Phenylringes gebunden und wird über eine agostische Wasserstoffbindung stabilisiert. Nach diesem Reaktionsprinzip entsteht nach Protolyse einer Metallocenalkylspezies mit einem perfluorierten [R₃NH]⁺[B(C₆F₅)₄]⁻- Salz im ersten Schritt ebenfalls eine kationische Spezies, wobei nun die Folgereaktion (C-H - Aktivierung) zu zwitterionischen Komplexen (d.h. das Metallatom ist kovalent an das "ehemalige" Anion gebunden) nicht möglich ist. Hierin werden auch Metallocene Cp₂MR₂ eingesetzt, bei denen die Alkylreste R zyklisch miteinander verbunden sind, wie z.B. Cp₂Zr(2,3-dimethyl-1,3-butadien). Dabei entstehen nach Protonolyse Salze der Form [Cp₂Zr-R-RH]⁺[B(C₆F₅)₄]⁻.

In US 5,198,401 werden entsprechende Systeme beansprucht, wobei Dimethylaniliniumsalze mit perfluorierten Tetraphenylboratanionen verwendet werden. Hierin werden auch Metallocene Cp₂MR₂ eingesetzt, bei denen die Alkylreste R zyklisch miteinander verbunden sind, wie z.B. Cp₂Zr(2,3-dimethyl-1,3-butadien). Dabei entstehen nach Protonolyse ebenfalls Salze der Form [Cp₂Zr-R-RH]⁺[B(C₆F₅)₄]⁻. In EP 277,003, EP 277,004, EP 495,375 und WO 91/14713 werden Systeme nach ähnlichem Verfahrensprinzip beansprucht.

In Chem. Ber. 1994, 127, 1613 wird die Addition eines Alkyldichloroborans am Bis(η⁵-Cp)dihydridowolfram beschrieben, die ebenfalls zu einer zwitteranionischen Verbindung führt.

Die beschriebenen Verfahren zur Darstellung der kationischen Systeme der Form [R₃M]⁺[BR₄]⁻ (M = Ti, Zr, Hf) haben den Nachteil, daß die kationisierenden Reagenzien (R₃NH⁺BR₄⁻) teilweise aufwendig zu synthetisieren und kostenintensiv sind. Zudem besteht das Problem, daß nach Protonolyse aus dem Ammoniumsalz ein Amin R₃N entsteht, das bei sterisch ungehinderten Metallzentren an das stark lewis-saure R₃M⁺-Kation koordinieren kann (US 5,198,401) und zu geringen Polymerisationsaktivitäten führt.

Die zwitterionischen Komplexe der Struktur Cp₂Zr⁺-m-C₆H₄B⁻Ph₃ haben den Nachteil, daß die Ausgangsverbindungen teuer und aufwendig zu synthetisieren sind und niedrige Polymerisationsaktivität zeigen.

Kationische Systeme der Struktur [Cp₂MR]⁺[RB(C₆F₅)₃]⁻ zeigen aufgrund des salzartigen Charakters sehr hohe Hydrolyseempfindlichkeiten und lassen sich nur beschränkt in technischem Maßstab einsetzen.

Es bestand nun die Aufgabe, eine Organometallverbindung zu finden, welche die Nachteile des Standes der Technik vermeidet.

Es wurde nun gefunden, daß diese Aufgabe gelöst werden kann durch eine spezielle Übergangsmetallverbindung.

Die vorliegende Erfindung betrifft somit eine Übergangsmetallverbindung der Formel I

Lₙ(XₘAₜR¹ _{q})ₛMYᵣ (I)

, worin
- M: ein Metallatom der Gruppe IIIb, IVb, Vb oder VIb des Periodensystems der Elemente ist,
- L: gleich oder verschieden ein π-Ligand oder ein Elektronendonor sind, n gleich 1, 2, 3 oder 4 ist,
- Y: gleich oder verschieden sind und für ein Wasserstoffatom, ein Halogenatom oder eine l-zähnige C₁-C₄₀-kohlenstoffhaltige Gruppe stehen, wobei l gleich 1, 2, 3 oder 4 ist, r gleich 0, 1, 2, 3, 4 oder 5 ist,
und mindestens einer der Reste L mindestens eine Gruppe XₘAₜR¹_{q} tragt, worin
- X: gleich oder verschieden ein Heteroatom oder eine C₁-C₄₀-kohlenstoffhaltige Gruppe sind, m gleich 0 oder 1 ist,
- A: ein Atom der Gruppe IIIa oder VIa des Periodensystems der Elemente ist, t gleich 1 ist,
- R¹: gleich oder verschieden sind und eine C₁-C₄₀-kohlenstoffhaltige Gruppe bedeuten, q gleich 1, 2, 3, 4 oder 5 ist, und s eine ganze Zahl von 1 bis 20 ist.
Zwei Reste L können über eine Verbrückung Z miteinander verbunden sein.

π-Liganden sind bevorzugt eine unsubstituierte Cyclopentadienylgruppe oder substituierte Cyclopentadienylgruppen, die als Reste bevorzugt einen oder mehrere C₁-C₃₀-Kohlenwasserstoffreste tragen, z.B. 2-Methylcyclopentadienyl, Methyi-tert.-butylcyclopentadienylt tert.-Butylcyclopentadienyl, Isopropylcyclopentadienyl, Dimethylcyclopentadienyl, Trimethylethylcyclopentadienyl, 5-Phenylcyclopentadienyl, Diphenylcyclopentadienyl, Indenyl, 2-Methylindenyl,2-Ethylindenyl, 3-Methylindenyl, 3-tert.-Butylindenyl, 2-Methyl-4-phenylindenyl, 2-Ethyl-4-phenylindenyl, 2-Methyl-4-naphthyl-indenyl, 2-Methyl-4-isopropylindenyl, Benzoindenyl, 2-Methyl-4,5-benzoindenyl, 2-Methyl-α-acenaphthindenyl, 2-Methyl-4,6-di-isopropylindenyl, Fluorenyl, 4-Methylfluorenyl oder 2,7-Di-tert.-butylfluorenyl. Besonders bevorzugt sind Indenylderivate. Bevorzugt tragen die Indenylderivate am Fünfring, insbesondere in 2-Position, einen C₁-C₁₀-Kohlenwasserstoffrest wie C₁-C₁₀-Alkyl und sind am Sechsring entweder unsubstituiert oder tragen einen oder mehrere C₁-C₂₀-Kohlenwasserstoffreste wie C₁-C₁₀-Alkyl, C₆-C₂₀-Aryl (z.B. Phenyl oder Naphthyl) oder zwei oder mehr der C₁-C₂₀-Kohlenwasserstoffreste bilden ein Ringsystem.

Unter einem Elektronendonor wird ein Atom der Gruppe IVa, Va, VIa oder VIIa des Periodensystems der Elemente verstanden, welches Substituenten wie C₁-C₃₀-Kohlenwasserstoffgruppen z.B. C₁-C₂₀-Alkyl oder C₆-C₁₄-Aryl tragen kann. Bevorzugt sind O, NR⁴₂, NR⁴, NR⁴₃, PR⁴₂, PR⁴, PR⁴₃, S, P(OR⁴)₂, P(OR⁴), R⁴ oder Cl, wobei R⁴ eine C₁-C₃₀-Kohlenwasserstoffgruppe wie C₁-C₂₀-Alkyl oder C₆-C₁₄-Aryl ist.

Die Verbrückung Z ist bevorzugt 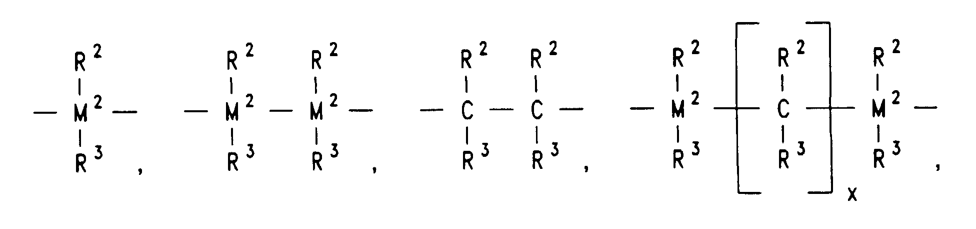 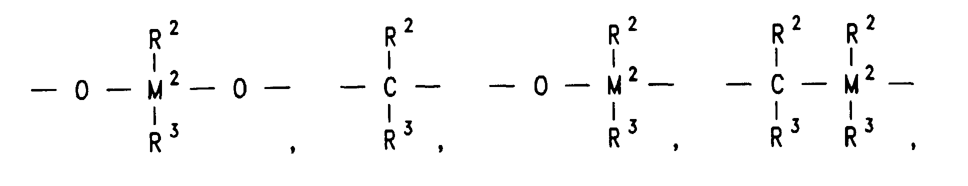 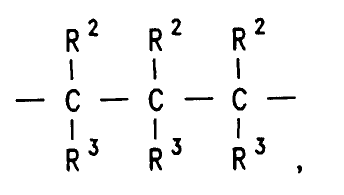 〉BR², 〉AIR², -Ge-, -O-, -S-, 〉SO, 〉SO₂, 〉NR², 〉CO, 〉PR² oder 〉P(O)R2, wobei R² und R³ gleich oder verschieden sind und ein Wasserstoffatom, ein Halogenatom oder eine C₁-C₄₀-kohlenstoffhaltige Gruppe ist wie eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl-, oder eine C₈-C₄₀-Arylalkenylgruppe oder R² und R³ jeweils mit den sie verbindenden Atomen einen oder mehrere Ringe bilden und R² oder/und R³ an L gebunden sein können, x eine ganze Zahl von Null bis 18, vorzugsweise 1 oder 2 ist, und
M² Silizium, Germanium oder Zinn ist.
Z kann auch zwei Gruppen Lₙ(XₘAₜR¹_{q})ₛMYᵣ miteinander verknüpfen.

Unter einem Heteroatom wird im Rahmen der vorliegenden Erfindung jedes Atom des Periodensystems der Elemente verstanden, mit Ausnahme von Kohlenstoff und Wasserstoff. Bevorzugt sind Silizium, Germanium und Zinn.

Die C₁-C₄₀-kohlenstoffhaltigen Gruppen Y können gesättigt oder ungesättigt, linear, cyclisch oder verzweigt sein, z.B. eine C₁-C₂₀-Alkyl-, eine C₁-C₂₀-Halogenalkyl, eine C₆-C₂₀-Aryl-, eine C₆-C₂₀-Halogenaryl-, eine C₂-C₄₀-Alkenyl-, eine C₇-C₄₀-Arylalkyl-, eine C₇-C₄₀-Alkylaryl- oder eine C₈-C₄₀-Arylalkenylgruppe, die Silizium, Germanium, Zinn, Sauerstoff, Stickstoff, Schwefel oder Phosphor enthalten können, z.B. eine Tri(C₁-C₁₀-alkyl)silyl-C₁-C₂₀-Alkyl-Gruppe oder Chelatliganden wie Acetylacetonat oder Bipyridyl.

Für den Fall, daß Y eine C₁-C₄₀-kohlenstoffhaltige Gruppe ist, ist diese an das Metallatom M kovalent gebunden und kann mit dem Metallatom M einen Metallacyclus bilden, wobei für den Fall, daß Y eine ungesättigte C₁-C₄₀-kohlenstoffhaltige Gruppe ist, deren π-Elektronen an das Metallatom M koordinieren können.

Beispiele für einzähnige C₁-C₄₀-kohlenstoffhaltige Gruppen Y sind C₁-C₂₀-Alkyl, C₂-C₂₀-Alkenyl oder C₆-C₂₀-Aryl. Beispiele für zweizähnige C₁-C₄₀-kohlenstoffhaltige Gruppen Y sind C₂-C₄₀-Alkenylen, Acetylacetonat oder Bipyridyl.

Die C₁-C₄₀-kohlenstoffhaltigen Gruppen X können gesättigt oder ungesättigt, linear, cyclisch oder verzweigt sein und z. B. eine C₁-C₂₀-Alkylen-, eine C₆-C₂₀-Arylen-, eine C₂-C₂₀-Alkenylen-, eine C₇-C₄₀-Arylalkylen-, eine C₇-C₄₀-Alkylarylen- oder eine C₈-C₄₀-Arylalkenylengruppe bedeuten, die Silizium, Germanium oder Zinn enthalten können, z.B. eine Tri(C₁-C₁₀-alkyl)silyl-C₁-C₂₀-Alkylen-Gruppe. Die Gruppe X verbindet L mit dem Atom A und ist vorzugsweise zweizähnig.

Die C₁-C₄₀-kohlenstoffhaltigen Gruppen R¹ können gesättigt oder ungesättigt, linear, cyclisch oder verzweigt sein und z. B. eine C₁-C₂₀-Alkyl-, eine C₁-C₂₀-Halogenalkyl-, eine C₆-C₂₀-Aryl-, eine C₆-C₂₀-Halogenaryl-, eine C₂-C₂₀-Alkenyl-, eine C₇-C₄₀-Arylalkyl-, eine C₇-C₄₀-Alkylaryl- oder eine C₈-C₄₀-Arylalkenylgruppe bedeuten. Die Gruppen R¹ sind Substituenten des Atoms A. Zwei oder mehr Gruppen R¹ können miteinander ein Ringsystem bilden. Bevorzugt sind die Gruppen R¹ halogenhaltig, insbesondere fluorhaltig, z. B. C₁-C₂₀-Halogenalkyl oder C₆-C₂₀-Halogenaryl, und können über ein Halogenatom an das Metallatom M koordinieren.

Wenn M ein Metallatom der Gruppe IV b des Periodensystems der Elemente ist, ist bevorzugt, daß n gleich 2, r gleich 1 oder 2, und falls Y eine l-zähnige C₁C₄₀ kohlenstoffhaltige Gruppe ist, l gleich 1 oder 2 ist.

Besonders bevorzugt sind Verbindungen der Formel I, worin
- M: ein Element der Gruppe IVb des Periodensystems der Elemente wie Titan, Zirkonium oder Hafnium ist,
- n: gleich 2 st,
- L: gleich oder verschieden sind und eine substituierte oder unsubstituierte Cyclopentadienylgruppe bedeuten, wobei zwei Reste L über eine Verbrückung Z miteinander verbunden sein können, wobei
- Z: bevorzugt CR²R³ oder SiR²R³ ist oder eine Einheit Si-(CR²R³)ₓ-Si bedeutet, die zwei Gruppen Lₙ(XₘAₜR¹_{q})ₛMYᵣ miteinander verknüpft, wobei R² und R³ gleich oder verschieden sind und eine C₁-C₂₀-Kohlenwasserstoffgruppe wie C₁-C₁₀-Alkyl oder C₆-C₁₀-Aryl bedeuten, und x eine ganze Zahl von 0 bis 10, bevorzugt x = 6 ist,
- Y: gleich oder verschieden sind und eine ein- oder zweizähnige, drei- bis sechsgliedrige kohlenstoffhaltige Gruppe bedeuten, die gesättigt oder ungesättigt ist und mit C₁-C₄₀-kohlenstoffhaltigen Gruppen wie C₁-C₁₀-Alkyl, C₆-C₂₀-Aryl oder Tri(C₁-C₁₀-alkyl)silyl substituiert sein kann, r gleich 1 oder 2 ist,
- X: eine C₁-C₂₀-Kohlenwasserstoffgruppe ist, wobei m gleich 0 oder 1 ist,
- A: ein Metallatom der Gruppe IIIa oder VIa des Periodensystems der Elemente ist, t gleich 1 ist,
- R¹: gleich oder verschieden sind und eine perhalogenierte, bevorzugt perfluorierte C₁-C₂₀-kohlenstoffhaltige Gruppe wie eine perfluorierte C₁-C₁₀-Alkyl- oder eine perfluorierte C₆-C₂₀-Arylgruppe bedeuten,
- q: gleich 2, 3 oder 4, und s gleich 1, 2, 3 oder 4 ist.
Dabei kann Y mit dem Metallatom M einen Metallacyclus bilden und für den Fall, daß Y eine ungesättigte drei- bis sechsgliedrige kohlenstoffhaltige Gruppe ist, können deren π-Elektronen an das Metallatom M koordinieren. Eine Gruppe R¹ kann über ein Halogenatom an das Metallatom M koordinieren.

Insbesondere bevorzugt sind Verbindungen der Formel I, worin
- M: Zirkonium ist,
- n: gleich 2 ist,
- L: gleich oder verschieden sind und eine substituierte Cyclopentadienylgruppe bedeuten, wobei zwei Reste L über eine Verbrückung Z miteinander verbunden sind, wobei Z bevorzugt CR²R³ oder SiR²R³ ist, wobei R² und R³ gleich oder verschieden sind und C₁-C₁₀-Alkyl oder C₆-C₁₀-Aryl bedeuten,
- Y: eine einzähnige ungesättigte C₅-Kohlenwasserstoffgruppe ist, die mit C₁-C₁₀-Alkylgruppen substituiert sein kann, r gleich 1 ist,
- m: gleich 0 ist,
- A: ein Atom der Gruppe IIIa des Periodensystems der Elemente ist z.B. ein Boratom oder ein Aluminiumatom, t gleich 1 ist,
- R¹: gleich sind und eine Pentafluorophenylgruppe (C₆F₅) bedeuten und
- q: gleich 3, und s gleich 1 oder 2 ist.
Dabei kann eine Pentafluorphenylgruppe über ein Fluoratom an das Metallatom M koordinieren.

Beispiele für erfindungsgemäße Übergangsmetallverbindungen der Formel I sind:
[Tris(pentafluorophenyl)(cyclopentadienyliden)borato](cyclopentadienyl)-1,2,3-trimethylpenta-1,3-dienylzirconium
[Tris(pentafluorophenyl)(methyl-cyclopentadienyidenl)borato](methyl-cyclopentadienyl)-1,2,3-trimethylpenta-1,3-dienylzirconium
[Tris(pentafluorophenyl)(n-butyl-cyclopentadienyliden)borato](n-butyl-cyclopentadienyl)-1,2,3-trimethylpenta-1,3-dienylzirconium
[Tris(pentafluorophenyl)(indenyliden)borato](indenyl)1,2,3-trimethylpenta-1,3-dienylzirconium
[Tris(pentafluorophenyl)(cyclopentadienyliden)borato](tert.butylamido)dimethylsil an-1,2,3-trimethylpenta-1,3-dienylzirconium
[Tris(pentafluorophenyl)(2-methylbenzindenyliden)borato](2-methylbenzindenyl)1,2,3-trimethylpenta-1,3-dienylzirconium
Dimethylsilandiyl-[tris(pentafluorophenyl)(2-methyl-indenyliden)borato](2-methyl-indenyl)1,2,3-trimethylpenta-1,3-dienylzirconium
Dimethylsilandiyl-[tris(pentafluorophenyl)(indenyliden)borato](indenyl)1,2,3-trimethylpenta-1,3-dienylzirconium
Dimethylsilandiyl-[tris(pentafluorophenyl)(2-methylbenzindenyliden)borato](2-methylbenzindenyl)1,2,3-trimethylpenta-1,3-dienylzirconium
Dimethylsilandiyl-[tris(pentafluorophenyl)(2-methyl-indenyliden)borato](2-methylbenzindenyl)1,2,3-trimethylpenta-1,3-dienylzirconium
Dimethylsilandiyl-[tris(pentafluorophenyl)(2-methylbenzindenyliden)borato](2-methyl-4-phenylindenyl)1,2,3-trimethylpenta-1,3-dienylzirconium
Dimethylsilandiyl-[tris(pentafluorophenyl)(2-methylindenyliden)borato](4-phenylindenyl)1,2,3-trimethylpenta-1,3-dienylzirconium
Dimethylsilandiyl-[tris(pentafluorophenyl)(2-methyl-4-phenylindenyliden)borato](2-methyl-4-phenylindenyl)1,2,3-trimethylpenta-1,3-dienylzirconium
Dimethylsilandiyl-[tris(pentafluorophenyl)(2-methyl-4,6-diisopropylindenyliden)borato](2-methyl-4,6-diisopropylindenyl)1,2,3-trimethylpenta-1,3-dienylzirconium
Dimethylsilandiyl-[tris(pentafluorophenyl)(2-methyl-4-naphthylindenyliden)borato](2-methyl-4-naphthylindenyl)1,2,3-trimethylpenta-1,3-dienylzirconium
Isopropyliden-[tris(pentafluorophenyl)(cyclopentadienyliden)borato](fluorenyl) 1,2,3-trimethylpenta-1,3-dienylzirconium
Isopropyliden-[tris(pentafluorophenyl)(cyclopentadienyliden)borato](indenyl) 1,2,3-trimethylpenta-1,3-dienylzirconium
[Tris(pentafluorophenyl)(cyclopentadienyliden)borato](-4,7,7-trimethyl-(4,5,6,7-tetrahydroindenyl)-1,2,3-trimethylpenta-1,3-dienylzirconium
[Tris(trifluoromethyl)(cyclopentadienyliden)borato](cyclopentadienyl)-1,2,3-trimethylpenta-1,3-dienylzirconium
[Tris(trifluoromethyl)(methyl-cyclopentadienyidenl)borato](methyl-cyclopentadienyl)-1,2,3-trimethylpenta-1,3-dienylzirconium
[Tris(trifluoromethyl)(n-butyl-cyclopentadienyliden)borato](n-butyl-cyclopentadienyl)-1,2,3-trimethylpenta-1,3-dienylzirconium
[Tris(trifluoromethyl)(indenyliden)borato](indenyl)1,2,3-trimethylpenta-1,3-dienylzirconium
[Tris(trifluoromethyl)(cyclopentadienyliden)borato](tert.butylamido)dimethylsilan-1,2,3-trimethylpenta-1,3-dienylzirconium
[Tris(trifluoromethyl)(2-methylbenzindenyliden)borato](2-methylbenzindenyl)1,2,3-trimethylpenta-1,3-dienylzirconium
Dimethylsilandiyl-[tris(trifluoromethyl)(2-methyl-indenyliden)borato](2-methylindenyl)1,2,3-trimethylpenta-1,3-dienylzirconium
Dimethylsilandiyl-[tris(trifluoromethyl)(indenyliden)borato](indenyl)1,2,3-trimethylpenta-1,3-dienylzirconium
Dimethylsilandiyl-[tris(trifluoromethyl)(2-methylbenzindenyliden)borato](2-methylbenzindenyl)1,2,3-trimethylpenta-1,3-dienylzirconium
Dimethylsilandiyl-[tris(trifluoromethyl)(2-methyl-indenyliden)borato](2-methylbenzindenyl)1,2,3-trimethylpenta-1,3-dienylzirconium
Dimethylsilandiyl-[tris(trifluoromethyl)(2-methylbenzindenyliden)borato](2-methyl-4-phenylindenyl)1,2,3-trimethylpenta-1,3-dienylzirconium
Dimethylsilandiyl-[tris(trifluoromethyl)(2-methylindenyliden)borato](4-phenylindenyl)1,2,3-trimethylpenta-1,3-dienylzirconium
Dimethylsilandiyl-[tris(trifluoromethyl)(2-methyl-4-phenylindenyliden)borato](2-methyl-4-phenylindenyl)1,2,3-trimethylpenta-1,3-dienylzirconium
Dimethylsilandiyl-[tris(trifluoromethyl)(2-methyl-4,6-diisopropylindenyliden)borato](2-methyl-4,6-diisopropylindenyl)1,2,3-trimethylpenta-1,3-dienylzirconium
Dimethylsilandiyl-[tris(trifluoromethyl)(2-methyl-4-naphthylindenyliden)borato](2-methyl-4-naphthylindenyl)1,2,3-trimethylpenta-1,3-dienylzirconium
Isopropyliden-[tris(trifluoromethyl)(cyclopentadienyliden)borato](fluorenyl)1,2,3-trimethylpenta-1,3-dienylzirconium
Isopropyliden-[tris(trifluoromethyl)(cyclopentadienyliden)borato](indenyl)1,2,3-trimethylpenta-1,3-dienylzirconium
[Tris(trifluoromethyl)(cyclopentadienyliden)borato](-4,7,7-trimethyl-(4,5,6,7,-tetrahydroindenyl)-1,2,3-trimethylpenta-1,3-dienylzirconium
Methylphenylmethylen-[tris(pentafluorophenyl)(cyclopentadienyliden) borato](fluorenyl)-1,2,3-trimethylpenta-1,3-dienylzirconium
Diphenylmethylen-[tris(pentafluorophenyl)(cyclopentadienyidenl)borato] (fluorenyl)-1,2,3-trimethylpenta-1,3-dienylzirconium
Isopropyliden-[tris(pentafluorophenyl)(-3-methylcyclopentadienyidenl)borato] (fluorenyl)-1,2,3-trimethylpenta-1,3-dienylzirconium
Dimethylsilandiyl-[tris(pentafluorophenyl)(-3-(tert.-butylcyclopentadienyliden) borato]-(fluorenyl)-1,2,3-trimethylpenta-1,3-dienylzirconium
Diphenylsilandiyl-[tris(pentafluorophenyl)(-3-(trimethylsilyl)cyclopentadienyliden) borato]-(fluorenyl)-1,2,3-trimethylpenta-1,3-dienylzirconium
Methylphenylsilandiyl-[tris(pentafluorophenyl)(2-methylindenyliden)borato](2-methylindenyl)1,2,3-trimethylpenta-1,3-dienylzirconium
Methylphenylsilandiyl-[tris(pentafluorophenyl)(indenyliden)borato](indenyl)1,2,3-trimethylpenta-1,3-dienylzirconium
Methylphenylsilandiyl-[tris(pentafluorophenyl)(2-methyl-4,5-benzindenyliden) borato](2-methyl-4,5-benzindenyl)1,2,3-trimethylpenta-1,3-dienylzirconium
Methylphenylsilandiyl-[tris(pentafluorophenyl)(2-methylindenyliden)borato](2-methyl-4,5-benzindenyl)1,2,3-trimethylpenta-1,3-dienylzirconium
Methylphenylsilandiyl-[tris(pentafluorophenyl)(2-methyl-4,5-benzindenyliden) borato](2-methyl-4-phenylindenyl)1,2,3-trimethylpenta-1,3-dienylzirconium
Methylphenylsilandiyl-[tris(pentafluorophenyl)(2-methylindenyliden)borato](4-phenylindenyl)1,2,3-trimethylpenta-1,3-dienylzirconium
Methylphenylsilandiyl-[tris(pentafluorophenyl)(2-methyl-4-phenylindenyliden)borato](2-methyl-4-phenylindenyl)1,2,3-trimethylpenta-1,3-dienylzirconium
Methylphenylsilandiyl-[tris(pentafluorophenyl)(2-ethyl-4-phenylindenyliden)borato](2-ethyl-4-phenylindenyl)1,2,3-trimethylpenta-1,3-dienylzirconium
Methylphenylsilandiyl-[tris(pentafluorophenyl)(2-methyl-4,6-diisopropylindenyliden)-borato](2-methyl-4,6-diisopropylindenyl)1,2,3-trimethylpenta-1,3-dienylzirconium
Methylphenylsilandiyl-[tris(pentafluorophenyl)(2-methyl-4-naphthyl-indenyliden)borato](2-methyl-4-naphthylindenyl)1,2,3-trimethylpenta-1,3-dienylzirconium
Ethylen-[tris(pentafluorophenyl)(indenyliden)borato](indenyl)1,2,3-trimethylpenta-1,3-dienylzirconium
Ethylen-[tris(pentafluorophenyl)(2-methylindenyliden)borato](2-methylindenyl)1,2,3-trimethylpenta-1,3-dienylzirconium
Ethylen-[tris(pentafluorophenyl)(2-methyl-4,5-benzindenyliden)borato](2-methyl-4,5-benzindenyl)1,2,3-trimethylpenta-1,3-dienylzirconium
Ethylen-[tris(pentafluorophenyl)(2-methylindenyliden)borato](2-methyl-4,5-benzindenyl)1,2,3-trimethylpenta-1,3-dienylzirconium
Ethylen-[tris(pentafluorophenyl)(2-methyl-4,5-benzindenyliden)borato](2-methyl-4-phenylindenyl)1,2,3-trimethylpenta-1,3-dienylzirconium
Ethylen-[tris(pentafluorophenyl)(2-methylindenyliden)borato](4-phenylindenyl)1,2,3-trimethylpenta-1,3-dienylzirconium
Ethylen-[tris(pentafluorophenyl)(2-methyl-4-phenyl-indenyliden)borato](2-methyl-4-phenylindenyl)1,2,3-trimethylpenta-1,3-dienylzirconium
Ethylen-[tris(pentafluorophenyl)(2-methyl-4,6-diisopropyl-indenyliden)borato](2-methyl-4,6-diisopropylindenyl)1,2,3-trimethylpenta-1,3-dienylzirconium
Ethylen-[tris(pentafluorophenyl)(2-methyl-4-naphthyl-indenyliden)borato](2-methyl-4-naphthylindenyl)1,2,3-trimethylpenta-1,3-dienylzirconium
Ethylen-[tris(pentafluorophenyl)(2-ethyl-4-phenyl-indenyliden)borato](2-ethyl-4-phenylindenyl)1,2,3-trimethylpenta-1,3-dienylzirconium
[Bis(pentafluorophenyl)(cyclopentadienyliden)boran](cyclopentadienyl)-1,2,3-trimethylpenta-1,3-dienylzirconium
[Bis(pentafluorophenyl)(methyl-cyclopentadienyidenl)boran](methyl-cyclopentadienyl)-1,2,3-trimethylpenta-1,3-dienylzirconium
[Bis(pentafluorophenyl)(n-butyl-cyclopentadienyliden)boran](n-butyl-cyclopentadienyl)-1,2,3-trimethylpenta-1,3-dienylzirconium
[Bis(pentafluorophenyl)(indenyliden)boran](indenyl)1,2,3-trimethylpenta-1,3-dienylzirconium
[Bis(pentafluorophenyl)(cyclopentadienyliden)boran](tert.butylamido)dimethylsila n-1,2,3-trimethylpenta-1,3-dienylzirconium
[Bis(pentafluorophenyl)(2-methylbenzindenyliden)boran](2-methylbenzindenyl)1,2,3-trimethylpenta-1,3-dienylzirconium
Dimethylsilandiyl-[Bis(pentafluorophenyl)(2-methyl-indenyliden)boran](2-methylindenyl)1,2,3-trimethylpenta-1,3-dienylzirconium
Dimethylsilandiyl-[Bis(pentafluorophenyl)(indenyliden)boran](indenyl)1,2,3-trimethylpenta-1,3-dienylzirconium
Dimethylsilandiyl-[Bis(pentafluorophenyl)(2-methylbenzindenyliden)boran](2-methylbenzindenyl)1,2,3-trimethylpenta-1,3-dienylzirconium
Dimethylsilandiyl-[Bis(pentafluorophenyl)(2-methyl-indenyliden)boran](2-methylbenzindenyl)1,2,3-trimethylpenta-1,3-dienylzirconium
Dimethylsilandiyl-[Bis(pentafluorophenyl)(2-methylbenzindenyliden)boran](2-methyl-4-phenylindenyl)1,2,3-trimethylpenta-1,3-dienylzirconium
Dimethylsilandiyl-[Bis(pentafluorophenyl)(2-methylindenyliden)boran](4-phenylindenyl)1,2,3-trimethylpenta-1,3-dienylzirconium
Dimethylsilandiyl-[Bis(pentafluorophenyl)(2-methyl-4-phenylindenyliden)boran](2-methyl-4-phenylindenyl)1,2,3-trimethylpenta-1,3-dienylzirconium
Dimethylsilandiyl-[Bis(pentafluorophenyl)(2-methyl-4,6-diisopropylindenyliden)boran](2-methyl-4,6-diisopropylindenyl)1,2,3-trimethylpenta-1,3-dienylzirconium
Dimethylsilandiyl-[Bis(pentafluorophenyl)(2-methyl-4-naphthylindenyliden) boran](2-methyl-4-naphthylindenyl)1,2,3-trimethylpenta-1,3-dienylzirconium
Isopropyliden-[Bis(pentafluorophenyl)(cyclopentadienyliden)boran](fluorenyl) 1,2,3-trimethylpenta-1,3-dienylzirconium
Isopropyliden-[Bis(pentafluorophenyl)(cyclopentadienyliden)boran](indenyl)1,2,3-trimethylpenta-1,3-dienylzirconium
[Bis(pentafluorophenyl)(cyclopentadienyliden)boran](-4,7,7-trimethyl-(4,5,6,7,-tetrahydroindenyl)-1,2,3-trimethylpenta-1,3-dienylzirconium
[Bis(trifluoromethyl)(cyclopentadienyliden)boran](cyclopentadienyl)-1,2,3-trimethylpenta-1,3-dienylzirconium
[Bis(trifluoromethyl)(methyl-cyclopentadienyidenl)boran](methyl-cyclopentadienyl)-1,2,3-trimethylpenta-1,3-dienylzirconium
[Bis(trifluoromethyl)(n-butyl-cyclopentadienyliden)boran](n-butyl-cyclopentadienyl)-1,2,3-trimethylpenta-1,3-dienylzirconium
[Bis(trifluoromethyl)(indenyliden)boran](indenyl)1,2,3-trimethylpenta-1,3-dienylzirconium
[Bis(trifluoromethyl)(cyclopentadienyliden)boran](tert.butylamido)dimethylsilan-1,2,3-trimethylpenta-1,3-dienylzirconium
[Bis(trifluoromethyl)(2-methylbenzindenyliden)boran](2-methylbenzindenyl)1,2,3-trimethylpenta-1,3-dienylzirconium
Dimethylsilandiyl-[Bis(trifluoromethyl)(2-methyl-indenyliden)boran](2-methylindenyl)1,2,3-trimethylpenta-1,3-dienylzirconium
Dimethylsilandiyl-[Bis(trifluoromethyl)(indenyliden)boran](indenyl)1,2,3-trimethylpenta-1,3-dienylzirconium
Dimethylsilandiyl-[Bis(trifluoromethyl)(2-methylbenzindenyliden)boran](2-methylbenzindenyl)1,2,3-trimethylpenta-1,3-dienylzirconium
Dimethylsilandiyl-[Bis(trifluoromethyl)(2-methyl-indenyliden)boran](2-methylbenzindenyl)1,2,3-trimethylpenta-1,3-dienylzirconium
Dimethylsilandiyl-[Bis(trifluoromethyl)(2-methylbenzindenyliden)boran](2-methyl4-phenylindenyl)1,2,3-trimethylpenta-1,3-dienylzirconium
Dimethylsilandiyl-[Bis(trifluoromethyl)(2-methylindenyliden)boran](4-phenylindenyl)1,2,3-trimethylpenta-1,3-dienylzirconium
Dimethylsilandiyl-[Bis(trifluoromethyl)(2-methyl-4-phenylindenyliden)boran](2-methyl-4-phenylindenyl)1,2,3-trimethylpenta-1,3-dienylzirconium
Dimethylsilandiyl-[Bis(trifluoromethyl)(2-methyl-4,6-diisopropylindenyliden)boran](2-methyl-4,6-diisopropylindenyl)1,2,3-trimethylpenta-1,3-dienylzirconium
Dimethylsilandiyl-[Bis(trifluoromethyl)(2-methyl-4-naphthylindenyliden)boran](2-methyl-4-naphthylindenyl)1,2,3-trimethylpenta-1,3-dienylzirconium
Isopropyliden-[Bis(trifluoromethyl)(cyclopentadienyliden)boran](fluorenyl)1,2,3-trimethylpenta-1,3-dienylzirconium
Isopropyliden-[Bis(trifluoromethyl)(cyclopentadienyliden)boran](indenyl)1,2,3-trimethylpenta-1,3-dienylzirconium
[Bis(trifluoromethyl)(cyclopentadienyliden)boran](-4,7,7-trimethyl-(4,5,6,7,-tetrahydroindenyl)-1,2,3-trimethylpenta-1,3-dienylzirconium
Methylphenylmethylen-[Bis(pentafluorophenyl)(cyclopentadienyliden)boran] (fluorenyl)-1,2,3-trimethylpenta-1,3-dienylzirconium
Diphenylmethylen-[Bis(pentafluorophenyl)(cyclopentadienyidenl)boran] (fluorenyl)-1,2,3-trimethylpenta-1,3-dienylzirconium
Isopropyliden-[Bis(pentafluorophenyl)(-3-methylcyclopentadienyidenl)boran] (fluorenyl)-1,2,3-trimethylpenta-1,3-dienylzirconium
Dimethylsilandiyl-[Bis(pentafluorophenyl)(-3-(tert.-butylcyclopentadienyliden) boran](fluorenyl)-1,2,3-trimethylpenta-1,3-dienylzirconium
Diphenylsilandiyl-[Bis(pentafluorophenyl)(-3-(trimethylsilyl)cyclopentadienyliden) boran](fluorenyl)-1,2,3-trimethylpenta-1,3-dienylzirconium
Methylphenylsilandiyl-[Bis(pentafluorophenyl)(2-methylindenyliden)boran](2-methylindenyl)1,2,3-trimethylpenta-1,3-dienylzirconium
Methylphenylsilandiyl-[Bis(pentafluorophenyl)(indenyliden)boran](indenyl)1,2,3-trimethylpenta-1,3-dienylzirconium
Methylphenylsilandiyl-[Bis(pentafluorophenyl)(2-methyl-4,5-benzindenyliden) boran](2-methyl-4,5-benzindenyl)1,2,3-trimethylpenta-1,3-dienylzirconium
Methylphenylsilandiyl-[Bis(pentafluorophenyl)(2-methylindenyliden)boran](2-methyl-4,5-benzindenyl)1,2,3-trimethylpenta-1,3-dienylzirconium
Methylphenylsilandiyl-[Bis(pentafluorophenyl)(2-methyl-4,5-benzindenyliden) boran](2-methyl-4-phenylindenyl)1,2,3-trimethylpenta-1,3-dienylzirconium
Methylphenylsilandiyl-[Bis(pentafluorophenyl)(2-methylindenyliden)boran](4-phenylindenyl)1,2,3-trimethylpenta-1,3-dienylzirconium
Methylphenylsilandiyl-[Bis(pentafluorophenyl)(2-methyl-4-phenyl-indenyliden) boran](2-methyl-4-phenylindenyl)1,2,3-trimethylpenta-1,3-dienylzirconium
Methylphenylsilandiyl-[Bis(pentafluorophenyl)(2-ethyl-4-phenyl-indenyliden) boran](2-ethyl-4-phenylindenyl)1,2,3-trimethylpenta-1,3-dienylzirconium
Methylphenylsilandiyl-[Bis(pentafluorophenyl)(2-methyl-4,6-diisopropylindenyliden)boran](2-methyl-4,6-diisopropylindenyl)1,2,3-trimethylpenta-1,3-dienylzirconium
Methylphenylsilandiyl-[Bis(pentafluorophenyl)(2-methyl-4-naphthyl-indenyliden) boran](2-methyl-4-naphthylindenyl)1,2,3-trimetnylpenta-1,3-dienylzirconium
Ethylen-[Bis(pentafluorophenyl)(indenyliden)boran](indenyl)1,2,3-trimethylpenta-1,3-dienylzirconium
Ethylen-[Bis(pentafluorophenyl)(2-methylindenyliden)boran](2-methylindenyl) 1,2,3-trimethylpenta-1,3-dienylzirconium
Ethylen-[Bis(pentafluorophenyl)(2-methyl-4,5-benzindenyliden)boran](2-methyl-4,5-benzindenyl)1,2,3-trimethylpenta-1,3-dienylzirconium
Ethylen-[Bis(pentafluorophenyl)(2-methylindenyliden)boran](2-methyl-4,5-benzindenyl)1,2,3-trimethylpenta-1,3-dienylzirconium
Ethylen-[Bis(pentafluorophenyl)(2-methyl-4,5-benzindenyliden)boran](2-methyl-4-phenylindenyl)1,2,3-trimethylpenta-1,3-dienylzirconium
Ethylen-[Bis(pentafluorophenyl)(2-methylindenyliden)boran](4-phenylindenyl) 1,2,3-trimethylpenta-1,3-dienylzirconium
Ethylen-[Bis(pentafluorophenyl)(2-methyl-4-phenyl-indenyliden)boran](2-methyl-4-phenylindenyl)1,2,3-trimethylpenta-1,3-dienylzirconium
Ethylen-[Bis(pentafluorophenyl)(2-methyl-4,6-diisopropyl-indenyliden)boran](2-methyl-4,6-diisopropylindenyl)1,2,3-trimethylpenta-1,3-dienylzirconium
Ethylen-[Bis(pentafluorophenyl)(2-methyl-4-naphthyl-indenyliden)boran](2-methyl-4-naphthylindenyl)1,2,3-trimethylpenta-1,3-dienylzirconium
Ethylen-[Bis(pentafluorophenyl)(2-ethyl-4-phenyl-indenyliden)boran](2-ethyl-4-phenylindenyl)1,2,3-trimethylpenta-1,3-dienylzirconium

[Tris(pentafluorophenyl)(cyclopentadienyliden)borato](cyclopentadienyl)-1,2,3,4-tetraphenylbuta-1,3-dienylzirconium
[Tris(pentafluorophenyl)(2-methylbenzindenyliden)borato](2-methylbenzindenyl) 1,2,3,4-tetraphenylbuta-1,3-dienylzirconium
Dimethylsilandiyl-[tris(pentafluorophenyl)(2-methylindenyliden)borato](2-methyl -indenyl)1,2,3,4-tetraphenylbuta-1,3-dienylzirconium
Dimethylsilandiyl-[tris(pentafluorophenyl)(2-methylbenzindenyliden)borato](2-methyl-4-phenylindenyl)1,2,3,4-tetraphenylbuta-1,3-dienylzirconium
Dimethylsilandiyl-[tris(pentafluorophenyl)(2-methyl-4-phenylindenyliden)borato] (2-methyl-4-phenylindenyl)1,2,3,4-tetraphenylbuta-1,3-dienylzirconium
Dimethylsilandiyl-[tris(pentafluorophenyl)(2-methyl-4-naphthylindenyliden)borato ](2-methyl-4-naphthylindenyl)-1,2,3,4-tetraphenylbuta-1,3-dienylzirconium
Isopproyliden-[tris(pentafluorophenyl)(cyclopentadienyliden)borato](fluorenyl)-1,2,3,4-tetraphenylbuta-1,3-dienylzirconium
Dimethylsilandiyl-[tris(trifluoromethyl)(2-methylbenzindenyliden)borato](2-methylbenzindenyl-)-1,2,3,4-tetraphenylbuta-1,3-dienylzirconium
Dimethylsilandiyl-[tris(trifluoromethyl)(2-methyl-4-phenylindenyliden)borato](2-methyl-4-phenylindenyl)-1,2,3,4-tetraphenylbuta-1,3-dienylzirconium
Dimethylsilandiyl-[tris(trifluoromethyl)(2-methyl-4,6-diisopropylindenyliden) borato](2-methyl-4,6-diisopropylindenyl)-1,2,3,4-tetraphenylbuta-1,3-dienylzirconium
Methylphenylmethylen-[tris(pentafluorophenyl)(cyclopentadienyliden)borato] (fluorenyl)-1,2,3,4-tetraphenylbuta-1,3-dienylzirconium
Methylphenylsilandiyl-[tris(pentafluorophenyl)(2-methyl-4,5-benzindenyliden) borato](2-methyl-4,5-benzindenyl)-1,2,3,4-tetraphenylbuta-1,3-dienylzirconium
Methylphenylsilandiyl-[tris(pentafluorophenyl)(2-ethyl-4-phenyl-indenyliden) borato](2-ethyl-4-phenylindenyl)-1,2,3,4-tetraphenylbuta-1,3-dienylzirconium
Ethylen-[tris(pentafluorophenyl)(2-methylindenyliden)borato](2-methylindenyl)-1,2,3,4-tetraphenylbuta-1,3-dienylzirconium
[Tris(pentafluorophenyl)(cyclopentadienyliden)borato](cyclopentadienyl)-1-methyl-2,3-cyclohexylen-penta-1,3-dienylzirconium
Dimethylsilandiyl-[tris(pentafluoropnenyl)(2-methyl-4-phenylindenyliden) borato](2-methyl-4-phenylindenyl)1-methyl-2,3-cyclohexylen-penta-1,3-dienylzirconium
[Tris(pentafluorophenyl)(cyclopentadienyliden)borato](cyclopentadienyl)-1,4-di(trimethylsilyl)-2,3-dimethyl-buta-1,3-dienylzirconium
Dimethylsilandiyl-[tris(pentafluorophenyl)(2-methyl-4-phenylindenyliden) borato](2-methyl-4-phenylindenyl)-1,4-di(trimethylsilyl)-2,3-dimethyl-buta-1,3-dienylzirconium
[Tris(pentafluorophenyl)(cyclopentadienyliden)borato](cyclopentadienyl)acetylacetonato-zirconium
Dimethylsilandiyl-[tris(pentafluorophenyl)(2-methyl-4-phenylindenyliden) borato](2-methyl-4-phenylindenyl)-acetylacetonato-zirconium
[Tris(pentafluorophenyl)(cyclopentadienyliden)borato](cyclopentadienyl)bipyridyl-zirconium
Dimethylsilandiyl-[tris(pentafluorophenyl)(2-methyl-4-phenylindenyliden) borato](2-methyl-4-phenylindenyl)-bipyridyl-zirconium
[Tris(pentafluorophenyl)(cyclopentadienyliden)borato](cyclopentadienyl)chloro-zirconium
Dimethylsilandiyl-[tris(pentafluorophenyl)(2-methyl-4-phenylindenyliden) borato](2-methyl-4-phenylindenyl)-chloro-zirconium
[Tris(pentafluorophenyl)(cyclopentadienyliden)borato]bis(cyclopentadienyl) zirconium
[Tris(pentafluorophenyl)(2-methylbenzindenyliden)borato](2-methylbenzindenyl) methylzirconium
Dimethylsilandiyl-[tris(pentafluorophenyl)(2-methyl-indenyliden)borato](2-methyl-indenyl)methylzirconium
Dimethylsilandiyl-[tris(pentafluorophenyl)(2-methylbenzindenyliden)borato](2-methyl-4-phenylindenyl)methylzirconium
Dimethylsilandiyl-[tris(pentafluorophenyl)(2-methyl-4-naphthylindenyliden)borato] (2-methyl-4-naphthylindenyl)methylzirconium
Isopropyliden-[tris(pentafluorophenyl)(cyclopentadienyliden)borato](fluorenyl) methylzirconium
Dimethylsilandiyl-[tris(trifluoromethyl)(2-methylbenzindenyliden)borato](2-methylbenzindenyl-)methylzirconium
Dimethylsilandiyl-[tris(trifluoromethyl)(2-methyl-4-phenylindenyliden)borato](2-m ethyl-4-phenylindenyl)methylzirconium
Dimethylsilandiyl-[tris(trifluoromethyl)(2-methyl-4,6-diisopropylindenyliden) borato](2-methyl-4,6-diisopropylindenyl)methylzirconium
Methylphenylmethylen-[tris(pentafluorophenyl)(cyclopentadienyliden)borato] (fluorenyl)methylzirconium
Methylphenylsilandiyl-[tris(pentafluorophenyl)(2-methyl-4,5-benzindenyliden) borato](2-methyl-4,5-benzindenyl)methylzirconium
Methylphenylsilandiyl-[tris(pentafluorophenyl)(2-ethyl-4-phenyl-indenyliden) borato](2-ethyl-4-phenylindenyl)methylzirconium
Ethylen-[tris(pentafluorophenyl)(2-methylindenyliden)borato)(2-methylindenyl) methylzirconium
[Tris(pentafluorophenyl)(2-methylbenzindenyliden)borato](2-methylbenzindenyl) phenylzirconium

Dimethylsilandiyl-[tris(pentafluorophenyl)(2-methyl-indenyliden)borato](2-methyl-indenyl)phenylzirconium
Dimethylsilandiyl-[tris(pentafluorophenyl)(2-methylbenzindenyliden)borato](2-methyl-4-phenylindenyl)phenylzirconium
Dimethylsilandiyl-[tris(pentafluorophenyl)(2-methyl-4-naphthylindenyliden)borato] (2-methyl-4-naphthylindenyl)phenylzirconium
Isopropyliden-[tris(pentafluorophenyl)(cyclopentadienyliden)borato](fluorenyl) phenylzirconium
Dimethylsilandiyl-[tris(trifluoromethyl)(2-methylbenzindenyliden)borato](2-methylbenzindenyl-)phenylzirconium
Dimethylsilandiyl-[tris(trifluoromethyl)(2-methyl-4-phenylindenyliden)borato](2-methyl-4-phenylindenyl)phenylzirconium
Dimethylsilandiyl-[tris(trifluoromethyl)(2-methyl-4,6-diisopropylindenyliden) borato](2-methyl-4,6-diisopropylindenyl)phenylzirconium
Methylphenylmethylen-[tris(pentafluorophenyl)(cyclopentadienyliden)borato] (fluorenyl)phenylzirconium
Methylphenylsilandiyl-[tris(pentafluorophenyl)(2-methyl-4,5-benzindenyliden) borato](2-methyl-4,5-benzindenyl)phenylzirconium
Methylphenylsilandiyl-[tris(pentafluorophenyl)(2-ethyl-4-phenyl-indenyliden) borato](2-ethyl-4-phenylindenyl)phenylzirconium
Ethylen-[tris(pentafluorophenyl)(2-methylindenyliden)borato](2-methylindenyl) phenylzirconium
[Bis(pentafluorophenyl)(cyclopentadienyliden)boran](cyclopentadienyl)-1,2,3,4-tetraphenylbuta-1,3-dienylzirconium
[Bis(pentafluorophenyl)(2-methylbenzindenyliden)boran](2-methylbenzindenyl) 1,2,3,4-tetraphenylbuta-1,3-dienylzirconium
Dimethylsilandiyl-[bis(pentafluorophenyl)(2-methyl-indenyliden)boran](2-methyl-indenyl)1,2,3,4-tetraphenylbuta-1,3-dienylzirconium
Dimethylsilandiyl-[bis(pentafluorophenyl)(2-methylbenzindenyliden)boran](2-methyl-4-phenylindenyl)1,2,3,4-tetraphenylbuta-1,3-dienylzirconium
Dimethylsilandiyl-[bis(pentafluorophenyl)(2-methyl-4-phenylindenyliden)boran] (2-methyl-4-phenylindenyl)1,2,3,4-tetraphenylbuta-1,3-dienylzirconium
Dimethylsilandiyl-[bis(pentafluorophenyl)(2-methyl-4-naphthylindenyliden)boran] (2-methyl-4-naphthylindenyl)-1,2,3,4-tetraphenylbuta-1,3-dienylzirconium
Isopropyliden-[bis(pentafluorophenyl)(cyclopentadienyliden)boran](fluorenyl)1,2,3,4-tetraphenylbuta-1,3-dienylzirconium
Dimethylsilandiyl-[bis(trifluoromethyl)(2-methylbenzindenyliden)boran](2-methylbenzindenyl-)-1,2,3,4-tetraphenylbuta-1,3-dienylzirconium
Dimethylsilandiyl-[bis(trifluoromethyl)(2-methyl-4-phenylindenyliden)boran](2-methyl-4-phenylindenyl)-1,2,3,4-tetraphenylbuta-1,3-dienylzirconium
Dimethylsilandiyl-[bis(trifluoromethyl)(2-methyl-4,6-diisopropylindenyliden)boran] (2-methyl-4,6-diisopropylindenyl)-1,2,3,4-tetraphenylbuta-1,3-dienylzirconium

Methylphenylmethylen-[bis(pentafluorophenyl)(cyclopentadienyliden)boran] (fluorenyl)-1,2,3,4-tetraphenylbuta-1,3-dienylzirconium
Methylphenylsilandiyl-[bis(pentafluorophenyl)(2-methyl-4,5-benzindenyliden) boran](2-methyl-4,5-benzindenyl)-1,2,3,4-tetraphenylbuta-1,3-dienylzirconium
Methylphenylsilandiyl-[bis(pentafluorophenyl)(2-ethyl-4-phenyl-indenyliden) boran](2-ethyl-4-phenylindenyl)-1,2,3,4-tetraphenylbuta-1,3-dienylzirconium
Ethylen-[bis(pentafluorophenyl)(2-methylindenyliden)boran](2-methylindenyl)-1,2,3,4-tetraphenylbuta-1,3-dienylzirconium
[Bis(pentafluorophenyl)(cyclopentadienyliden)boran](cyclopentadienyl)-1-methyl-2,3-cyclohexylen-penta-1,3-dienylzirconium
Dimethylsilandiyl-[bis(pentafluorophenyl)(2-methyl-4-phenylindenyliden)boran](2-methyl-4-phenylindenyl)1-methyl-2,3-cyclohexylen-penta-1,3-dienylzirconium
[Bis(pentafluorophenyl)(cyclopentadienyliden)boran](cyclopentadienyl)-1,4-di (trimethylsilyl)-2,3-dimethyl-buta-1,3-dienylzirconium
Dimethylsilandiyl-[bis(pentafluorophenyl)(2-methyl-4-phenylindenyliden)boran] (2-methyl-4-phenylindenyl)-1,4-di(trimethylsilyl)-2,3-dimethyl-buta-1,3-dienylzirconium
[Bis(pentafluorophenyl)(cyclopentadienyliden)boran](cyclopentadienyl)acetylacetonato-zirconium
Dimethylsilandiyl-[bis(pentafluorophenyl)(2-methyl-4-phenylindenyliden)boran](2-methyl-4-phenylindenyl)-acetylacetonato-zirconium
[Bis(pentafluorophenyl)(cyclopentadienyliden)boran](cyclopentadienyl)-bipyridylzirconium
Dimethylsilandiyl-[bis(pentafluorophenyl)(2-methyl-4-phenylindenyliden)boran](2-methyl-4-phenylindenyl)-bipyridyl-zirconium
[Bis(pentafluorophenyl)(cyclopentadienyliden)boran](cyclopentadienyl)dichlorozirconium
Dimethylsilandiyl-[bis(pentafluorophenyl)(2-methyl-4-phenylindenyliden)boran](2-methyl-4-phenylindenyl)-dichloro-zirconium
[Bis(pentafluorophenyl)(2-methylbenzindenyliden)boran](2-methylbenzindenyl) dimethylzirconium
Dimethylsilandiyl-[bis(pentafluorophenyl)(2-methyl-indenyliden)boran](2-methyl-indenyl)dimethylzirconium
Dimethylsilandiyl-[bis(pentafluorophenyl)(2-methylbenzindenyliden)boran](2-methyl-4-phenylindenyl)dimethylzirconium
Dimethylsilandiyl-[bis(pentafluorophenyl)(2-methyl-4-naphthylindenyliden) boran](2-methyl-4-naphthylindenyl)dimethylzirconium
Isopropyliden-[bis(pentafluorophenyl)(cyclopentadienyliden)boran](fluorenyl) dimethylzirconium
Dimethylsilandiyl-[bis(trifluoromethyl)(2-methylbenzindenyliden)boran](2-methylbenzindenyl-)dimethylzirconium
Dimethylsilandiyl-[bis(trifluoromethyl)(2-methyl-4-phenylindenyliden)boran](2-methyl-4-phenylindenyl)dimethylzirconium
Dimethylsilandiyl-[bis(trifluoromethyl)(2-methyl-4,6-diisopropylindenyliden) boran](2-methyl-4,6-diisopropylindenyl)dimethylzirconium
Methylphenylmethylen-[bis(pentafluorophenyl)(cyclopentadienyliden)boran] (fluorenyl)dimethylzirconium
Methylphenylsilandiyl-[bis(pentafluorophenyl)(2-methyl-4,5-benzindenyliden) boran](2-methyl-4,5-benzindenyl)dimethylzirconium
Methylphenylsilandiyl-[bis(pentafluorophenyl)(2-ethyl-4-phenyl-indenyliden) boran](2-ethyl-4-phenylindenyl)dimethylzirconium
Ethylen-[bis(pentafluorophenyl)(2-methylindenyliden)boran](2-methylindenyl) dimethylzirconium
[Bis(pentafluorophenyl)(2-methylbenzindenyliden)boran](2-methylbenzindenyl) diphenylzirconium
Dimethylsilandiyl-[bis(pentafluorophenyl)(2-methyl-indenyliden)boran](2-methyl-indenyl)diphenylzirconium
Dimethylsilandiyl-[bis(pentafluorophenyl)(2-methylbenzindenyliden)boran](2-methyl-4-phenylindenyl)diphenylzirconium
Dimethylsilandiyl-[bis(pentafluorophenyl)(2-metnyl-4-naphthylindenyliden) boran](2-methyl-4-naphthylindenyl)diphenylzirconium
Isopropyliden-[bis(pentafluorophenyl)(cyclopentadienyliden)boran](fluorenyl)diphenylzirconium
Dimethylsilandiyl-[bis(trifluoromethyl)(2-methylbenzindenyliden)boran](2-methylbenzindenyl-)diphenylzirconium
Dimethylsilandiyl-[bis(trifluoromethyl)(2-methyl-4-phenylindenyliden)boran](2-methyl-4-phenylindenyl)diphenylzirconium
Dimethylsilandiyl-[bis(trifluoromethyl)(2-methyl-4,6-diisopropylindenyliden) boran](2-methyl-4,6-diisopropylindenyl)diphenylzirconium

Methylphenylmethylen-[bis(pentafluorophenyl)(cyclopentadienyliden)boran] (fluorenyl)diphenylzirconium
Methylphenylsilandiyl-[bis(pentafluorophenyl)(2-methyl-4,5-benzindenyliden) boran](2-methyl-4,5-benzindenyl)diphenylzirconium
Methylphenylsilandiyl-[bis(pentafluorophenyl)(2-ethyl-4-phenylindenyliden) boran](2-ethyl-4-phenylindenyl)diphenylzirconium
Ethylen-[bis(pentafluorophenyl)(2-methylindenyliden)boran](2-methylindenyl) diphenylzirconium

Die Herstellung von erfindungsgemäßen Übergangsmetallverbindungen der Formel I soll durch die nachfolgenden Reaktionsschemata veranschaulicht werden.

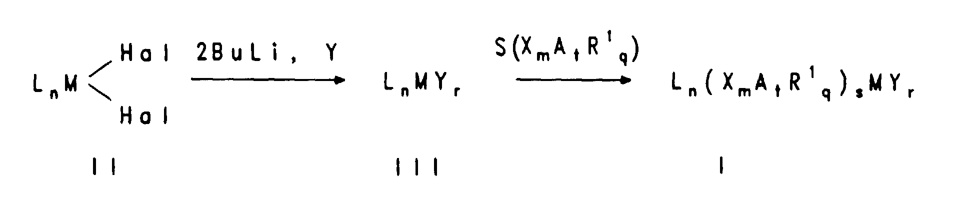

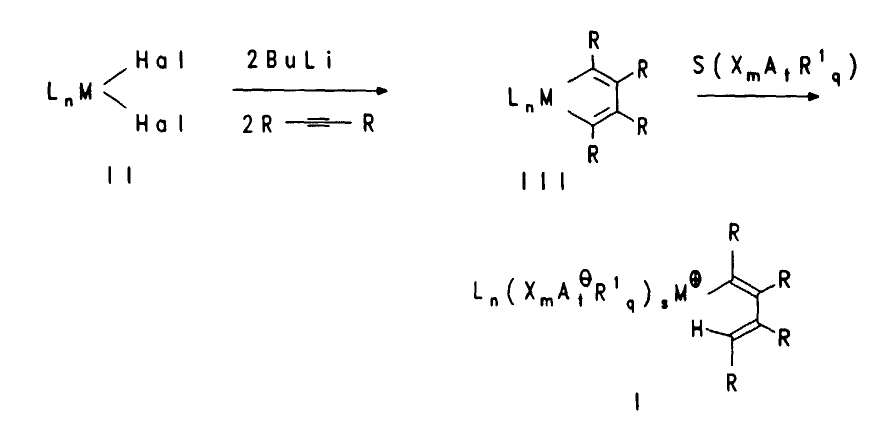

Dabei haben L, n, M, Y, r, s, t, A, R¹, X, m und q die gleiche Bedeutung wie oben in Formel I angegeben, R ist eine C₁-C₄₀-kohlenstoffhaltige Gruppe wie C₁-C₁₀Alkyl, C₆-C₂₀-Aryl oder Tri(C₁-C₁₀-alkyl)silyl, und Hal ist ein Halogen wie Fluor oder Chlor. Verbindungen der Formel II sind in der Literatur vielfach beschrieben (J. Okuda, Topics in Current Chemistry, Vol. 160; Springer Verlag, Berlin Heidelberg 1991, Seite 97).

Die Umsetzung von Verbindungen der Formel II in inerten Lösungsmitteln mit Alkyllithium-Verbindungen (wie Butyllithium (BuLi)) und Alkin-Verbindungen (wie 2-Butin, 3-Hexin, Diphenylacetylen, Trimethylsilylphenylacetylen (1-Trimethylsilyl-2-phenylethin)) kann unter Salzabspaltung zur Bildung cyclischer Systeme (Metallacyclopentadiene) der Formel III führen, in denen die M-Y-Bindung kovalent ist.

Die Umsetzung der Verbindungen der Formel III mit Lewis-Sauren der allgemeinen Formel XₘAₜR¹_{q} erfolgt in organischen Lösungsmitteln, wie z.B. Toluol, Benzol, Methylenchlorid, Tetrachlorkohlenstoff und Benzin. Es wird eine Übergangsmetallverbindung der Formel I erhalten, in der die M-Y-Bindung kovalent ist. Übergangsmetallverbindungen der Formel I, in denen Y eine ungesättigte Kohlenwasserstoffgruppe wie eine Dieneinheit ist, können mit Chelatierungsreagenzien wie Acetylaceton zu Übergangsmetallverbindungen der Formel I umgesetzt werden, in denen Y ein Chelatligand wie Acetylacetonat ist.

Die erfindungsgemäße Übergangsmetallverbindung der Formel I kann isoliert oder direkt für weitere Reaktionen eingesetzt werden. Die Übergangsmetallverbindung der Formel I können auch ohne Isolierung von Zwischen- und Endstufen in einer Eintopfreaktion aus Übergangsmetalldihalogeniden, Dianionverbindungen und Lewis-Säuren dargestellt und direkt für die Polymerisaton eingesetzt werden.

Geeignete Lösungsmittel sind aliphatische oder aromatische Lösemittel, wie z.B. Hexan oder Toluol oder halogenierte Kohlenwasserstoffe, wie z.B. Methylenchlorid oder halogenierte aromatische Kohlenwasserstoffe wie z.B. o-Dichlorbenzol.

Eine weitere Möglichkeit zur Darstellung der erfindungsgemäßen Übergangsmetallverbindungen besteht in der Bildung von Metallacyclen der Formel III durch Umsetzung von LₙMR⁴₂ (R⁴ gleich oder verschieden CO, H, CH₃ sind) mit dem entsprechenden Alkin und der Umsetzung mit der geeigneten Lewis-Säure.

Die Umsetzung von Natriumcyclopentadienid mit XₘAₜR¹_{q} in inerten Lösungsmitteln und weitere Umsetzung mit MCl₄ führt ebenfalls zur erfindungsgemäßen Verbindung I.

Die vorliegende Erfindung betrifft auch ein Verfahren zur Herstellung eines Polyolefins durch Polymerisation eines oder mehrerer Olefine in Gegenwart eines Katalysators, enthaltend mindestens eine Übergangsmetallverbindung der Formel I. Unter dem Begriff Polymerisation wird eine Homopolymerisation wie auch eine Copolymerisation verstanden.

Bevorzugt werden Olefine der Formel R^{a}-CH = CH-R^{b} polymerisiert, worin R^{a} und R^{b} gleich oder verschieden sind und ein Wasserstoffatom oder einen kohlenstoffhaltigen Rest mit 1 bis 20 C-Atomen, insbesondere 1 bis 10 C-Atomen, bedeuten, und R^{a} und R^{b} zusammen mit den sie verbindenen Atomen einen oder mehrere Ringe bilden können. Beispiele für solche Olefine sind 1-Olefine mit 2 bis 40, vorzugsweise 2 bis 10 C-Atomen, wie Ethylen, Propylen, 1-Buten, 1-Penten, 1-Hexen, 4-Methyl-1-penten oder 1-Octen, Styrol, Diene wie 1,3-Butadien, 1,4-Hexadien, Vinylnorbornen oder Norbornadien und cyclische Olefine wie Norbornen, Tetracyclododecen oder Methylnorbornen. Bevorzugt werden in dem erfindungsgemäßen Verfahren Ethylen oder Propylen homopolymerisiert, oder Ethylen mit einem oder mehreren 1-Olefinen mit 3 bis 20 C-Atomen, wie Propylen, und/oder einem oder mehreren Dienen mit 4 bis 20 C-Atomen, wie 1,4-Butadien oder Norbornadien, copolymerisiert. Beispiele solcher Copolymere sind Ethylen/Propylen-Copolymere und Ethylen/Propylen/1,4-Hexadien-Copolymere.

Die Polymerisation wird bevorzugt bei einer Temperatur von -60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden.

Bevorzugt enthält der in dem erfindungsgemäßen Verfahren eingesetzte Katalysator eine Übergangsmetallverbindung der Formel I. Es können auch Mischungen zweier oder mehrerer Übergangsmetallverbindungen der Formel I, oder Mischungen von Übergangsmetallverbindungen der Formel I mit Metallocenen oder klassischen Ziegler-Natta-Katalysatoren eingesetzt werden, z.B. zur Herstellung von Polyolefinen mit breiter oder multimodaler Molmassenverteilung.
Mit Hilfe des erfindungsgemäßen Übergangsmetallverbindung der Formel I kann eine Vorpolymerisation erfolgen. Zur Vorpolymerisation wird bevorzugt das (oder eines der) in der Polymerisation eingesetzte(n) Olefin(e) verwendet.

Die Übergangsmetallverbindungen der Formel I können auch auf einen Träger aufgebracht werden. Durch die Trägerung läßt sich beispielsweise die Kornmorphologie des hergestellten Polyolefins steuern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form.

Das geträgerte Katalysatorsystem kann als Pulver oder noch Lösemittel behaftet wieder resuspendiert und als Suspension in einem inerten Suspensionsmittel in das Polymerisationssystem eindosiert werden.

Vor der Zugabe des Katalysators, insbesondere des geträgerten Katalysatorsystems (enthaltend eine Übergangsmetallverbindung der Formel I und ein Trägermaterial) ist eine Reinigung mit einer Aluminiumalkylverbindung, wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Katalysatorgifte im Olefin) vorteilhaft. Diese Reinigung kann sowohl im Polymerisationssystem selbst erfolgen, oder das Olefin wird vor der Zugabe in das Polymerisationsystem mit der Al-Verbindung in Kontakt gebracht und anschließend wieder getrennt. Wird diese Reinigung im Polymerisationssystem selbst durchgeführt, wird die Aluminiumalkylverbindung in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt.

Grundsätzlich ist der Einsatz weiterer Substanzen zur Katalyse der Polymerisationsreaktion nicht erforderlich, d.h., die erfindungsgemäßen Übergangsmetallverbindungen der Formel I können ohne einen Cokatalysator für die Olefinpolymerisation eingesetzt werden.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.

Dabei wird das Katalysatorsystem in einer Konzentration, bezogen auf das Übergangsmetall von bevorzugt 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan genannt. Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Die nach dem erfindungsgemäßen Verfahren hergestellten Polymere sind insbesondere zur Herstellung von Formkörpern wie Folien, Platten oder Großhohlkörpern (z.B. Rohre) geeignet.

Die nachfolgenden Beispiele dienen zur näheren Erläuterung der Erfindung.

Allgemeine Angaben: Herstellung und Handhabung organometallischer Verbindungen erfolgten unter Ausschluß von Luft und Feuchtigkeit unter Argon-Schutz (Schlenk-Technik). Alle benötigen Lösungsmittel wurden vor Gebrauch durch mehrstündiges Sieden über einem geeigneten Trockenmittel und anschließende Destillation unter Argon absolutiert.

Die Verbindungen wurden mit ¹H-NMR, ¹³C-NMR und IR-Spektroskopie charakterisiert.

### Beispiel 1: [Tris(pentafluorophenyl)(η⁵-cyclopentadienyliden)borato](η⁵-cyclopentadienyl)-(1,2,3-trimethylpenta-1,3-dienyl)zirconium

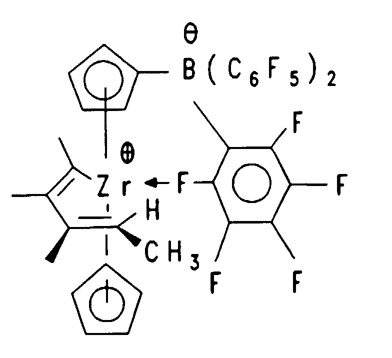

### a) 1-Bis(η⁵-cyclopentadien)zircona-2,3,4,5-tetramethylcyclopentadien

Zu einer auf -78°C gekühlten Lösung von 1 g (3,40 mmol) Zirkonocendichlorid in 20 ml THF tropft man 4,5 ml (7,1 mmol) einer 1,6 M Losung von n-Butyllithum in Hexan. Man läßt 24 Stunden rühren und läßt bei -78°C eine Lösung von 0,55 g (0,8 ml, 10,2 mmol) 2-Butin in 10 ml THF zutropfen. Sehr langsam läßt man auf Raumtemperatur erwärmen und entfernt dann das Lösungsmittel im Ölpumpenvakuum. Der feste Rückstand wird zweimal mit 30 ml Pentan extrahiert und die vereinigten Pentanphasen im Ölpumpenvakuum zur Trockne eingeengt. Man erhält 1,09 g (98 %) eines rotbraunen Pulvers.

### b) [Tris(pentafluorophenyl)(η⁵-cyclopentadienyliden)borato](η⁵-cyclopentadienyl)-(1,2,3-trimethylpenta-1,3-dienyl)zirconium

2 mmol Bis(η⁵-cyclopentadienyl)zircona-2,3,4,5-tetramethyl-cyclopentadien werden in 50 ml Toluol gelost und mit einer Losung von 2 mmol Tris(pentafluorophenyl)boran in 35 ml Toluol versetzt. Die erhalten braune Lösung wird acht Stunden bei Raumtemperatur gerührt und dann vom Lösungsmittel befreit. Der zurückgebliebene braune Rückstand wird zweimal mit 25 ml Pentan gewaschen und dann im Ölpumpenvakuum getrocknet. Man erhält 1,12 g eines gelben Pulvers, welches gut in Toluol, Methylenchlorid und THF löslich ist.

### Beispiel 2: Dimethylsilandiyl-[tri(pentafluorophenyl(2-methyl-4,5-benzoindenylidn)borato](2-methyl-4,5-benzoindenyl)-1,2,3-trimethylpenta-1,3-dienylzirconium

Zu einer auf -78°C gekühlten Lösung von 3 mmol Dimethylsilandiyl(2-methyl-4,5-benzoindenyl)zirconiumdichlorid in 20 ml THF tropft man 4 ml einer 1,6 M Lösung von Butyllithium in Hexan. Man rührt 24 Stunden nach und gibt bei -78°C eine Losung von 9 mmol 2-Butin in 10 ml THF tropfenweise dazu. Sehr langsam läßt man auf Raumtemperatur erwärmen und entfernt das Lösungsmittel im Ölpumpenvakuum. Der feste Rückstand wird zweimal mit 30 ml Pentan extrahiert und die vereinigten Pentanphasen im Ölpumpenvakuum zur Trockene eingedampft. Man erhält Dimethylsilandiyl-bis(2-methyl-4,5-benzoindenyl)zircona-2,3,4,5-tetramethylcyclopentadien als pulverigen Feststoff in 96 %iger Ausbeute.

2 mmol dieses Metallacyclus werden in 50 ml Toluol gelöst und mit einer Lösung von 2 mmol Tris(pentafluorophenyl)boran in 35 ml Toluol versetzt. Die erhaltene braune Lösung wird acht Stunden bei Raumtemperatur gerührt und dann vom Lösungsmittel befreit. Der zurückbleibende braune Rückstand wird mit Pentan gewaschen und im Ölpumpenvakuum getrocknet. Man erhält Dimethylsilandiyl[tri(pentafluorophenyl(2-methyl-4,5-benzoindenyliden)borato](2-methyl-4,5-benzoindenyl-1,2,3-trimethylpenta-1,3-dienylzirconium in 76 %iger Ausbeute.

### Beispiel 3: [Tris(pentafluorophenyl)(η⁵-cyclopentadienyliden)borato](η⁵-cyclopentadienyl)-acetylacetonato-zirkonium

2 mmol [Tris(pentafluorophenyl)(η⁵-cyclopentadienyliden)borato](η⁵-cyclopentadienyl)(1,2,3-trimethylpenta-1,3-dienyl)zirkonium werden in 100 ml Toluol gelost, mit einer Lösung von 10 mmol Acetylaceton in 50 ml Toluol versetzt und 10 Stunden bei Raumtemperatur gerührt. Anschließend wird das Lösungsmittel im Ölpumpenvakuum entfernt und der zurückbleibende hellbraune Feststoff in möglichst wenig Toluol erneut aufgelöst. Man gibt eine analoge Menge Pentan zu und lagert die Lösung zwei Tage bei 4°C, um das Produkt auszufällen. Danach wird das überstehende Lösungsmittel dekantiert und das zurückbleibende gelbe Pulver mit wenig Pentan gewaschen und im Ölpumpenvakuum getrocknet. Man erhält [Tris[pentafluorophenyl)(η⁵-cyclopentadienyliden)borato](η⁵-cyclopentadienyl)-acetylacetonato-zirkonium in 76 %iger Ausbeute.

### Beispiel 4: [Tris(pentafluorophenyl)(η⁵-cyclopentadienyliden)borato](η⁵-cyclopentadienyl)methylzirkonium

Zu einer Lösung von 0,5 mmol [Tris(pentafluorophenyl)(η⁵-cyclopentadienyliden)borato](η⁵-cyclopentadienyl)-acetylacetonato-zirkonium in 35 ml Toluol werden 1.6 ml AlMe₃ (16 mmol) gehebert. Die schwach gelb gefärbte Lösung färbt sich nach 10 min orange. Anschließend rührt man noch 2 h bei Raumtemperatur und gibt zur Desaktivierung von überschüssigem AlMe₃ 15 ml Diethylether zu. Die Lösung wird zur Trockne eingeengt und das erhaltene rote Öl einmal mit 20 ml Pentan gewaschen. Man erhält einen rotorangen Feststoff in 83 %iger Ausbeute.

## Patentansprüche

1. Übergangsmetallverbindung der Formel I
Lₙ(XₘAₜR¹ _{q})ₛMYᵣ (I),
worin
M ein Metallatom der Gruppe IIIb, IVb, Vb oder Vlb des Periodensystems der Elemente ist,
L gleich oder verschieden ein π-Ligand oder ein Elektronendonor sind, n gleich 1, 2, 3 oder 4 ist,
Y unabhängig voneinander gleich oder verschieden sind und für ein Wasserstoffatom, ein Halogenatom oder eine I-zähnige C₁-C₄₀-kohlenstoffhaltige Gruppe stehen, wobei I gleich 1, 2, 3 oder 4 ist, r gleich 0, 1, 2, 3, 4 oder 5 ist,
und mindestens einer der Reste L mindestens eine Gruppe XₘAₜR¹_{q} trägt, worin
X gleich oder verschieden ein Heteroatom oder eine C₁-C₄₀-kohlenstoffhaltige Gruppe sind, m gleich 0 oder 1 ist,
A ein Atom der Gruppe IIIa oder VIa des Periodensystems der Elemente ist, t gleich 1 ist,
R¹ gleich oder verschieden sind und eine C₁-C₄₀-kohlenstoffhaltige Gruppe bedeuten, q gleich 1, 2, 3, 4 oder 5 ist, und s eine ganze Zahl von 1 bis 20 ist.

2. Übergangsmetallverbindung der Formel I gemäß Anspruch 1, worin L gleich oder verschieden sind und unsubstituierte oder substituierte Cyclopentadienylgruppen bedeuten.

3. Übergangsmetallverbindung der Formel I gemäß Anspruch 1 oder 2, worin L gleich oder verschieden sind und Indenylderivate bedeuten.

4. Übergangsmetallverbindung der Formel I gemäß einem oder mehreren der Ansprüche 1 bis 3, worin n gleich 2 ist und die beiden Reste L über eine Verbrückung Z miteinander verbunden sind.

5. Übergangsmetallverbindung der Formel I gemäß Anspruch 4, worin die Verbrückung Z 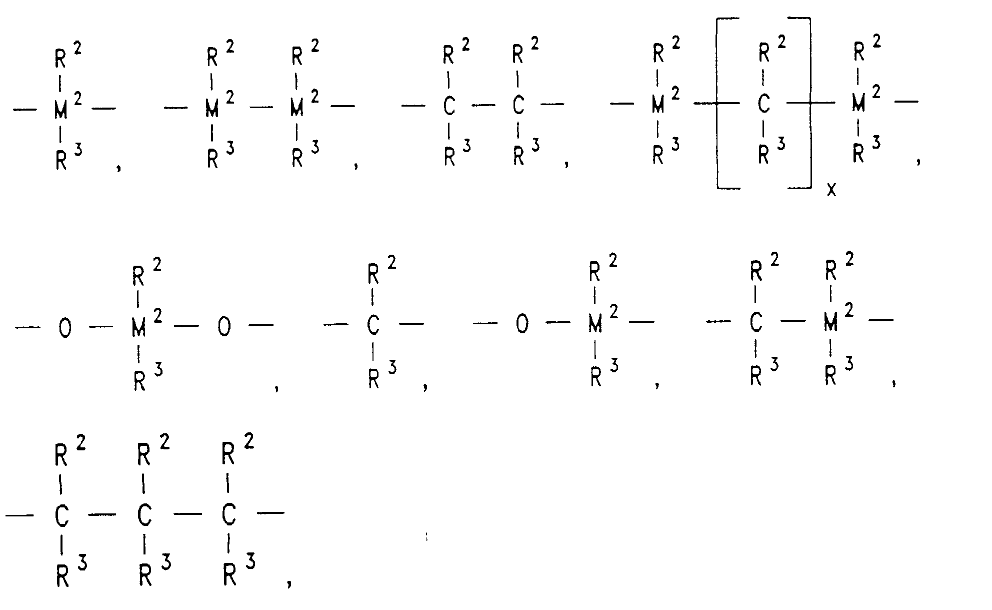 〉BR², 〉AIR², -Ge-, -O-, -S-, 〉SO, 〉SO₂, 〉NR², 〉CO, 〉PR² oder 〉P(O)R² ist, wobei R² und R³ gleich oder verschieden sind und ein Wasserstoffatom, ein Halogenatom oder eine C₁-C₄₀-kohlenstoffhaltige Gruppe ist oder R² und R³ jeweils mit den sie verbindenden Atomen einen oder mehrere Ringe bilden und
R² oder/und R³ an L gebunden sein können, x eine ganze Zahl von Null bis 18 ist, und
M² Silizium, Germanium oder Zinn ist.

6. Übergangsmetallverbindung der Formel I gemäß einem oder mehreren der Ansprüche 1 bis 5, worin Y gesättigt oder ungesättigt, linear, cyclisch oder verzweigt sind und eine C₁-C₂₀-Alkyl-, eine C₁-C₂₀-Halogenalkyl-, eine C₆-C₂₀-Aryl-, eine C₆-C₂₀-Halogenaryl-, eine C₂-C₄₀-Alkenyl-, eine C₇-C₄₀-Arylalkyl-, eine C₇-C₄₀-Alkylaryl- oder eine C₈-C₄₀-Arylalkenylgruppe bedeuten, die Silizium, Germanium, Zinn, Sauerstoff, Stickstoff, Schwefel oder Phosphor enthalten kann.

7. Übergangsmetallverbindung der Formel I gemäß einem oder mehreren der Ansprüche 1 bis 6, worin X gesättigt oder ungesättigt, linear, cyclisch oder verzweigt sind und eine C₁-C₂₀-Alkylen-, eine C₆-C₂₀-Arylen-, eine C₂-C₂₀-Alkenylen-, eine C₇-C₄₀-Arylalkylen-, eine C₇-C₄₀-Alkylarylen- oder eine C₈-C₄₀-Arylalkenylengruppe bedeuten, die Silizium, Germanium oder Zinn enthalten kann.

8. Übergangsmetallverbindung der Formel I gemäß einem oder mehreren der Ansprüche 1 bis 7, worin R¹ gesättigt oder ungesättigt, linear, cyclisch oder verzweigt sind und eine C₁-C₂₀-Alkyl-, eine C₁-C₂₀-Halogenalkyl, eine C₆-C₂₀-Aryl-, eine C₆-C₂₀-Halogenaryl-, eine C₂-C₂₀-Alkenyl-, eine C₇-C₄₀-Arylalkyl-, eine C₇-C₄₀-Alkylaryl- oder eine C₈-C₄₀-Arylalkenylgruppe bedeuten.

9. Übergangsmetallverbindung der Formel I gemäß einem oder mehreren der Ansprüche 1 bis 8, worin A ein Element der Gruppe IIIa des Periodensystems der Elemente ist.

10. Übergangsmetallverbindung der Formel I gemäß einem oder mehreren der Ansprüche 1 bis 9, worin
M Titan, Zirkonium oder Hafnium ist,
n gleich 2 ist,
L gleich oder verschieden sind und eine substituierte oder unsubstituierte Cyclopentadienylgruppe bedeuten, wobei zwei Reste L über eine Verbrückung Z miteinander verbunden sein können, wobei
Z CR²R³ oder SiR²R³ ist oder eine Einheit Si-(CR²R³)ₓ-Si bedeutet, die zwei Gruppen Lₙ(XₘAₜR¹_{q})ₛMYᵣ miteinander verknüpft, wobei R² und R³ gleich oder verschieden sind und eine C₁-C₂₀-Kohlenwasserstoffgruppe wie C₁-C₁₀-Alkyl oder C₆-C₁₀-Aryl bedeuten, und x eine ganze Zahl von 0 bis 10, bevorzugt x = 6 ist,
Y eine ein- oder zweizähnige, drei- bis sechsgliedrige kohlenstoffhaltige Gruppe bedeutet, die gesättigt oder ungesättigt ist und mit C₁-C₄₀-kohlenstoffhaltigen Gruppen substituiert sein kann, r gleich 1 oder 2 ist,
X eine C₁-C₂₀-Kohlenwasserstoffgruppe ist, wobei m gleich 0 oder 1 ist,
A ein Metallatom der Gruppe IIIa oder Vla des Periodensystems der Elemente ist, t gleich 1 ist,
R¹ gleich oder verschieden sind, und eine perhalogenierte C₁-C₂₀-kohlenstoffhaltige Gruppe bedeuten,
q gleich 2, 3 oder 4, und s gleich 1, 2, 3 oder 4 ist.

11. Übergangsmetallverbindung der Formel I gemäß einem oder mehreren der Ansprüche 1 bis 10, worin
M Zirkonium ist,
n gleich 2 ist,
L gleich oder verschieden sind und eine substituierte Cyclopentadienylgruppe bedeuten, wobei zwei Reste L über eine Verbrückung Z miteinander verbunden sind, wobei Z bevorzugt CR²R³ oder SiR²R³ ist, wobei R² und R³ gleich oder verschieden sind und C₁-C₁₀-Alkyl oder C₆-C₁₀-Aryl bedeuten,
Y eine einzähnige ungesättigte C₅-Kohlenwasserstoffgruppe ist, die mit C₁-C₁₀-Alkylgruppen substituiert sein kann, r gleich 1 ist,
m gleich 0 ist,
A ein Boratom oder ein Aluminiumatom ist, t gleich 1 ist,
R¹ gleich sind und eine Pentafluorophenylgruppe (C₆F₅) bedeuten und
q gleich 3, und s gleich 1 oder 2 ist.

12. Katalysator, enthaltend mindestens eine Übergangsmetallverbindung gemäß einem oder mehreren der Ansprüche 1 bis 11.

13. Katalysator gemäß Anspruch 12, zusätzlich enthaltend einen Träger.

14. Katalysator gemäß Anspruch 12 oder 13 in vorpolymerisierter Form.

15. Verfahren zur Herstellung eines Polyolefins durch Polymerisation eines oder mehrerer Olefine in Gegenwart eines Katalysators, gemäß einem oder mehreren der Ansprüche 12 bis 14.

16. Verfahren gemäß Anspruch 15, worin eines oder mehrere Olefine der Formel R^{a}-CH=CHR^{b} polymerisiert werden, worin R^{a} und R^{b} gleich oder verschieden sind und ein Wasserstoffatom oder einen kohlenstoffhaltigen Rest mit 1 bis 20 C-Atomen, bedeuten, und R^{a} und R^{b} zusammen mit den sie verbindenen Atomen einen oder mehrere Ringe bilden können.

17. Verfahren gemäß Anspruch 15 oder 16, worin eines oder mehrere 1-Olefine mit 2 bis 40 C-Atomen polymerisiert werden.

18. Verwendung einer Übergangsmetallverbindung der Formel I gemäß einem oder mehreren der Ansprüche 1 bis 11, zur Olefinpolymerisation.

## Claims

1. A transition metal compound of the formula I
Lₙ(XₘAₜR¹ _{q})ₛMYᵣ (I),
where
M is a metal atom of group IIIb, IVb, Vb or Vlb of the Periodic Table of the Elements,
L are identical or different and are each a π ligand or an electron donor, n is 1, 2, 3 or 4,
Y are, independently of one another, identical or different and are each a hydrogen atom, a halogen atom or an I-dentate C₁-C₄₀-group, where I is 1, 2, 3 or 4, r is 0, 1, 2, 3, 4 or 5,
and at least one of the radicals L bears at least one group XₘAₜR¹_{q}, where
X are identical or different and are each a hetero atom or a C₁-C₄₀-group, m is 0 or 1,
A is an atom of group IIIa or VIa of the Periodic Table of the Elements, t is 1,
R¹ are identical or different and are each a C₁-C₄₀-group, q is 1, 2, 3, 4 or 5, and s is an integer from 1 to 20.

2. A transition metal compound of the formula I as claimed in claim 1, wherein L are identical or different and are unsubstituted or substituted cyclopentadienyl groups.

3. A transition metal compound of the formula I as claimed in claim 1 or 2, wherein L are identical or different and are indenyl derivatives.

4. A transition metal compound of the formula I as claimed in one or more of claims 1 to 3, wherein n is 2 and the two radicals L are connected to one another via a bridge Z.

5. A transition metal compound of the formula I as claimed in claim 4, wherein the bridge Z is 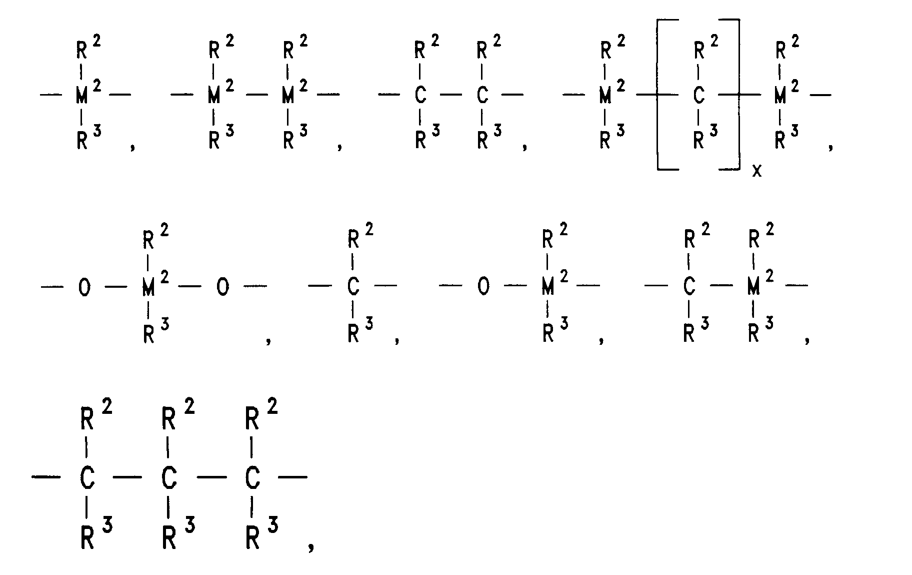 〉BR², 〉AlR², -Ge-, -O-, -S-, 〉SO, 〉SO₂, 〉NR², 〉CO, 〉PR² or 〉P(O)R², where R² and R³ are identical or different and are each a hydrogen atom, a halogen atom or a C₁-C₄₀-group or R² and R³ together with the atoms connecting them form one or more rings and R² or/and R³ can be bound to L, x is an integer from zero to 18, and M² is silicon, germanium or tin.

6. A transition metal compound of the formula I as claimed in one or more of claims 1 to 5, wherein Y are saturated or unsaturated, linear, cyclic or branched and are each a C₁-C₂₀-alkyl group, a C₁-C₂₀-haloalkyl group, a C₆-C₂₀-aryl group, a C₆-C₂₀-haloaryl group, a C₂-C₄₀-alkenyl group, a C₇-C₄₀-arylalkyl group, a C₇-C₄₀-alkylaryl group or a C₈-C₄₀-arylalkenyl group, each of which can contain silicon, germanium, tin, oxygen, nitrogen, sulfur or phosphorus.

7. A transition metal compound of the formula I as claimed in one or more of claims 1 to 6, wherein X are saturated or unsaturated, linear, cyclic or branched and are each a C₁-C₂₀-alkylene group, a C₆-C₂₀-arylene group, a C₂-C₂₀-alkenylene group, a C₇-C₄₀-arylalkylene group, a C₇-C₄₀-alkylarylene group or a C₈-C₄₀-arylalkenylene group, each of which can contain silicon, germanium or tin.

8. A transition metal compound of the formula I as claimed in one or more of claims 1 to 7, wherein R¹ are saturated or unsaturated, linear, cyclic or branched and are each a C₁-C₂₀-alkyl group, a C₁-C₂₀-haloalkyl group, a C₆-C₂₀-aryl group, a C₆-C₂₀-haloaryl group, a C₂-C₂₀-alkenyl group, a C₇-C₄₀-arylalkyl group, a C₇-C₄₀-alkylaryl group or a C₈-C₄₀-arylalkenyl group.

9. A transition metal compound of the formula I as claimed in one or more of claims 1 to 8, wherein A is an element of group IIIa of the Periodic Table of the Elements.

10. A transition metal compound of the formula I as claimed in one or more of claims 1 to 9, wherein
M is titanium, zirconium or hafnium,
n is 2,
L are identical or different and are each a substituted or unsubstituted cyclopentadienyl group, where two radicals L can be connected to one another via a bridge Z, where
Z is CR²R³ or SiR²R³ or a unit Si-(CR²R³)ₓ-Si which links two groups Lₙ(XₘAₜR¹_{q})ₛMYᵣ with one another, where R² and R³ are identical or different and are each a C₁-C₂₀-hydrocarbon group such as C₁-C₁₀-alkyl or C₆-C₁₀-aryl, and x is an integer from 0 to 10, preferably x = 6,
Y is a monodentate or bidentate, three- to six-membered carbon-containing group which is saturated or unsaturated and can be substituted by C₁-C₄₀-groups, r is 1 or 2,
X is a C₁-C₂₀-hydrocarbon group, where m is 0 or 1,
A is a metal atom of group IIIa or Vla of the Periodic Table of the Elements, t is 1,
R¹ are identical or different and are each a perhalogenated C₁-C₂₀-group,
q is 2, 3 or 4, and s is 1, 2, 3 or 4.

11. A transition metal compound of the formula I as claimed in one or more of claims 1 to 10, wherein
M is zirconium,
n is 2,
L are identical or different and are each a substituted cyclopentadienyl group, where two radicals L are connected to one another via a bridge Z, where Z is preferably CR²R³ or SiR²R³, where R² and R³ are identical or different and are C₁-C₁₀-alkyl or C₆-C₁₀-aryl,
Y is a monodentate unsaturated C₅-hydrocarbon group which can be substituted by C₁-C₁₀-alkyl groups, r is 1,
m is 0,
A is a boron atom or an aluminum atom, t is 1,
R¹ are identical and are each a pentafluorophenyl group (C₆F₅) and
q is 3, and s is 1 or 2.

12. A catalyst comprising at least one transition metal compound as claimed in one or more of claims 1 to 11.

13. A catalyst as claimed in claim 12, additionally containing a support.

14. A catalyst as claimed in claim 12 or 13 in prepolymerized form.

15. A process for preparing a polyolefin by polymerization of one or more olefins in the presence of a catalyst as claimed in one or more of claims 12 to 14.

16. The process as claimed in claim 15, wherein one or more olefins of the formula R^{a}-CH=CHR^{b} are polymerized, R^{a} and R^{b} are identical or different and are each a hydrogen atom or a carbon-containing radical having from 1 to 20 carbon atoms, and R^{a} and R^{b} together with the atoms connecting them can form one or more rings.

17. The process as claimed in claim 15 or 16, wherein one or more 1-olefins having from 2 to 40 carbon atoms are polymerized.

18. The use of a transition metal compound of the formula I as claimed in one or more of claims 1 to 11 for olefin polymerization.

## Revendications

1. Composé de métal de transition de la formule I
Lₙ(XₘAₜR¹ _{q})ₛMYᵣ (I)
dans laquelle
M représente un atome de métal du groupe IIIb, IVb, Vb ou Vlb du système périodique des éléments,
L identiques ou différents, représentent un π-ligand ou un donneur d'électrons, n est égal à 1, 2, 3 ou 4,
Y sont indépendamment les uns des autres identiques ou différents et représentent chacun un atome d'hydrogène, un atome d'halogène, ou un radical contenant du carbone en C₁ à C₁₀ I-dentate, où I est égal à 1, 2, 3 ou 4, r est égal à 0, 1, 2, 3, 4 ou 5,
et au moins l'un des restes L porte au moins un groupe XₘAₜR¹_{q}, où
X identiques ou différents représentent chacun un hétéroatome ou un groupe contenant du carbone en C₁ à C₄₀, m est égal à 0 ou à 1,
A représente un atome du groupe IIIa ou IVa du système périodique des éléments, t est égal à 1,
R¹ identiques ou différents représentent chacun un groupe contenant du carbone en C₁ à C₄₀, q est égal 1, 2, 3, 4 ou 5 est s est un nombre entier dont la valeur varie de 1 à 20.

2. Composés de métal de transition de la formule I suivant la revendication 1, où L, identiques ou différents, représentent des radicaux cyclopentadiényle non substitués ou substitués.

3. Composé de métal de transition de la formule I suivant la revendication 1 ou 2, où L, identiques ou différents, représentent des dérivés indényliques.

4. Composé de métal de transition de la formule I suivant une ou plusieurs des revendications 1 à 3, où n est égal à 2 et les deux restes L sont mutuellement reliés par un pontage Z.

5. Composé de métal de transition de la formule I suivant la revendication 4, où le pontage Z est un groupe de la formule 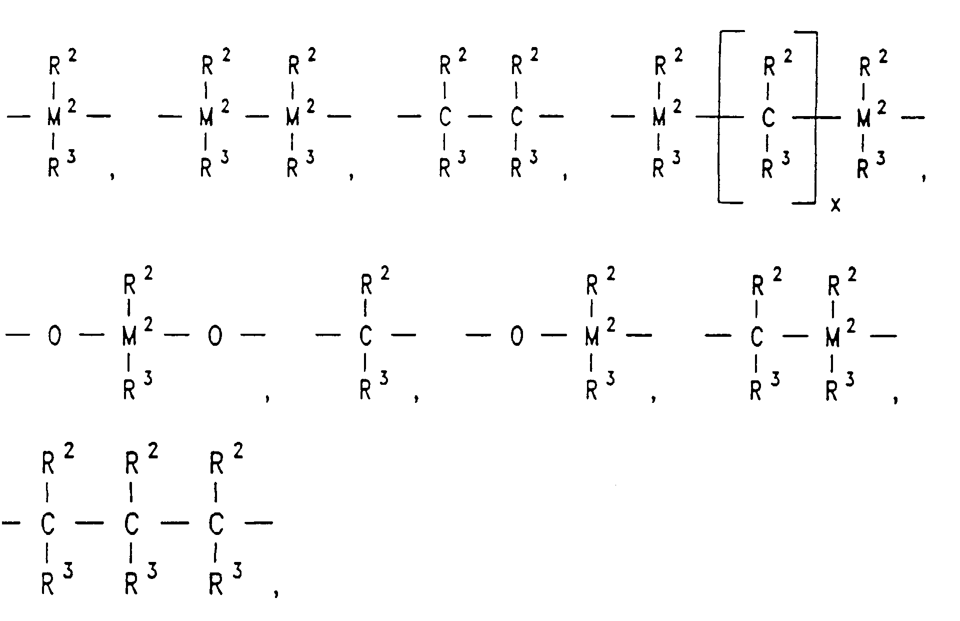 〉BR², 〉AIR², -Ge-, -O-, -S-, 〉SO, 〉SO₂, 〉NR², 〉CO, 〉PR² où 〉P(O)R² sont identiques ou différents et représentent chacun un atome d'hydrogène, un atome d'halogène ou un groupe contenant du carbone en C₁ à C₄₀, ou bien R² et R³ forment à chaque fois un ou plusieurs noyaux avec les atomes qui les relient et R² et/ou R³ peuvent être liés à L, x représente un nombre entier dont la valeur varie de zéro à 18 et
M² représente le silicium, le germanium, ou l'étain.

6. Composé de métal de transition de la formule I suivant une ou plusieurs des revendications 1 à 5, où Y, saturés ou insaturés, linéaires, cycliques ou ramifiés, représentent chacun un groupe alkyle en C₁ à C₂₀, un groupe halogénoalkyle C₁ à C₂₀, un groupe aryle en C₆ à C₂₀, un groupe halogénoaryle en C₆ à C₂₀, un groupe alcényle en C₂ à C₄₀, un groupe arylalkyle en C₇ à C₄₀, un groupe alkylaryle en C₇ à C₄₀, ou un groupe arylalcényle en C₈ à C₄₀, pouvant contenir du silicium, du germanium, de l'étain, de l'oxygène, de l'azote, du soufre ou du phosphore.

7. Composé de métal de transition de la formule I suivant une ou plusieurs des revendications 1 à 6, où X, saturés ou insaturés, linéaires, cycliques ou ramifiés, représentent chacun un groupe alkylène en C₁ à C₂₀, un groupe arylène en C₆ à C₂₀, un groupe alcénylène en C₂ à C₂₀, un groupe arylalcénylène en C₇ à C₄₀, un groupe alkylarylène en C₇ à C₄₀, ou un groupe arylalcénylène en C₈ à C₄₀, pouvant contenir du silicium, du gemanium ou de l'étain.

8. Composé de métal de transition de la formule I suivant une ou plusieurs des revendications 1 à 7, où R¹, saturés ou insaturés, linéaires, cycliques ou ramifiés, représentent chacun un groupe alkyle en C₁ à C₂₀, un groupe halogénoalkyle en C₁ à C₂₀, un groupe aryle en C₆ à C₂₀, un groupe halogénoaryle en C₆ à C₂₀, un groupe alcényle en C₂ à C₂₀, un groupe arylalkyle en C₇ à C₄₀, un groupe alkylaryle en C₇ à C₄₀, ou un groupe arylalcényle en C₈ à C₄₀.

9. Composé de métal de transition de la formule I suivant une ou plusieurs des revendications 1 à 8, où A représente un élément du groupe IIIa du système périodique des éléments.

10. Composé de métal de transition de la formule I suivant une ou plusieurs des revendications 1 à 9, où
M représente le titane, le zirconium ou l'hafnium,
n est égal à 2,
L identiques ou différents, représentent chacun un groupe cyclopentadiényle substitué ou non substitué, où deux restes L peuvent être mutuellement reliés par un pontage Z, où
Z représente CR²R³ ou SiR²R³ ou une unité Si-(CR²R³)ₓ-Si, les deux groupes Lₙ(XₘAₜR¹_{q})ₛMYᵣ sont mutuellement reliés, où R² et R³ sont identiques ou différents et représentent chacun un groupe hydrocarboné en C₁ à C₂₀, tel qu'un groupe alkyle en C₁ à C₁₀, ou un radical aryle en C₆ à C₁₀ et x représente un nombre entier dont la valeur varie de 0 à 10, de préférence x est égal à 6,
Y représente un groupe contenant du carbone comportant de 3 à 6 chaînons, monodentate ou bidentate, qui est saturé ou non saturé et qui peut être substitué par des radicaux contenant du carbone en C₁ à C₄₀, r est égal à 1 ou à 2,
X représente un groupe hydrocarboné en C₁ à C₂₀, où m est égal à 0 ou à 1,
A représente un atome de métal du groupe IIIa ou Vla du système périodique des éléments, t est égal à 1,
R¹ identiques ou différents, représentent chacun un groupe contenant du carbone en C₁ à C₂₀ perhalogéné,
q est égal à 2, 3 ou 4 et s est égal à 1, 2, 3 ou 4.

11. Composé de métal de transition de la formule I suivant une ou plusieurs des revendications 1 à 10, où
M représente le zirconium,
n est égal à 2,
L identiques ou différents, représentent chacun un groupe cyclopentadiényle substitué où deux restes L sont mutuellement reliés par l'intermédiaire d'un pontage Z, où Z représente, de préférence, un groupe CR²R³ ou SiR²R³, où R² et R³ sont identiques ou différents et représentent chacun un groupe alkyle en C₁ à C₁₀, ou un radical aryle en C₆ à C₁₀,
Y représente un radical hydrocarboné en C₅ insaturé et monodentate, qui peut être substitué par des radicaux alkyle en C₁ à C₁₀, r est égal à 1,
m est égal à 0,
A représente un atome de bore ou un atome d'aluminium, t est égal à 1,
R¹ sont identiques et représentent chacun un groupe pentafluorophényle (C₆F₅) et
q est égal à 3 et s est égal à 1 ou à 2.

12. Catalyseur contenant au moins un composé de métal de transition suivant une ou plusieurs des revendications 1 à 11.

13. Catalyseur suivant la revendication 12, contenant en outre un support.

14. Catalyseur suivant la revendication 12 ou 13, sous forme pré-polymérisée.

15. Procédé de préparation d'une polyoléfine par la polymérisation d'une ou plusieurs oléfines en présence d'un catalyseur, suivant une ou plusieurs des revendications 12 à 14.

16. Procédé suivant la revendication 15, où on polymérise une ou plusieurs oléfines de la formule R^{a}-CH=CHR^{b}, où R^{a} et R^{b} sont identiques ou différents et représentent un atome d'hydrogène ou un reste contenant du carbone comportant de 1 à 20 atomes de carbone et R^{a} et R^{b} peuvent former un ou plusieurs noyaux ensemble avec les atomes qui les relient.

17. Procédé suivant la revendication 15 ou 16, où on polymérise une ou plusieurs 1-oléfines comportant de 2 à 40 atomes de carbone.

18. Utilisation d'un composé de métal de transition de la formule I suivant l'une quelconque des revendications 1 à 11, pour la polymérisation d'oléfines.
